(19) Europäisches Patentamt
European Patent Office
Office européen des brevets

(11) **EP 2 895 572 B1**

(12) **FASCICULE DE BREVET EUROPEEN**

(45) Date de publication et mention
de la délivrance du brevet:
**24.06.2020 Bulletin 2020/26**

(21) Numéro de dépôt: **13762161.1**

(22) Date de dépôt: **09.08.2013**

(51) Int Cl.:
*C09K 8/08* *(2006.01)*          *C10M 173/00* *(2006.01)*
*B01F 17/00* *(2006.01)*

(86) Numéro de dépôt international:
**PCT/FR2013/051919**

(87) Numéro de publication internationale:
**WO 2014/041268 (20.03.2014 Gazette 2014/12)**

(54) **PROCEDE DE FORAGE DE CAVITES SOUTERRAINES, COMPOSITIONS A BASE D'ALKYLPOLYGLYCOSIDES ET LEUR UTILISATION COMME AGENT LUBRIFIANT DANS LA PREPARATION DE FLUIDES DE FORAGE AQUEUX**

VERFAHREN ZUM BOHREN VON UNTERTAGEHOHLRÄUMEN, ZUSAMMENSETZUNGEN MIT ALKYLPOLYGLYCOSIDEN UND VERWENDUNG DAVON ALS SCHMIERMITTEL BEI DER HERSTELLUNG VON WÄSSRIGEN BOHRSCHLÄMMEN

METHOD FOR DRILLING UNDERGROUND CAVITIES, COMPOSITIONS COMPRISING ALKYL POLYGLYCOSIDES, AND USE THEREOF AS A LUBRICANT IN THE PRODUCTION OF AQUEOUS DRILLING MUDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2012 FR 1258648**

(43) Date de publication de la demande:
**22.07.2015 Bulletin 2015/30**

(60) Demande divisionnaire:
**18211059.3 / 3 489 321**

(73) Titulaire: **Société d'Exploitation de Produits pour les**
**Industries Chimiques SEPPIC**
**75007 Paris (FR)**

(72) Inventeur: **GAYRAL CHIRAC, Marie-Françoise**
**F-81290 Viviers-les-Montagnes (FR)**

(74) Mandataire: **Grout de Beaufort, François-Xavier**
**L'Air Liquide**
**Direction Propriété Intellectuelle**
**75, quai d'Orsay**
**75321 Paris Cedex 07 (FR)**

(56) Documents cités:
**WO-A1-93/07249          WO-A1-03/106584**
**WO-A1-2012/085391     US-A- 5 663 137**
**US-A- 5 734 029**

## Description

La présente invention concerne un procédé de forage de cavités dans des formations souterraines, mettant en œuvre une étape d'évacuation des déblais de forage par injection de fluides aqueux comprenant des sels et des alkylpolyglycosides.

Les technologies de forage de formations souterraines sont mises en œuvre pour les étapes de prospection et de production dans les activités des industries pétrolières et gazières. Dans ce domaine technique, on entend :

- Par prospection, l'ensemble des activités visant à rechercher et à découvrir de nouveaux gisements de pétrole et de gaz naturel. Ces activités ont recours à des forages d'exploration pour confirmer la présence d'hydrocarbures et à des forages d'évaluation, qui permettent d'estimer la viabilité économique de l'exploitation du gisement découvert ;
- Par production, l'ensemble des activités visant à extraire les hydrocarbures de leur réservoir souterrain, et qui comprennent notamment des forages de puits.

Les techniques de forage les plus utilisées mettent en œuvre un fluide, dit fluide de forage, qui est un mélange complexe de différents composants liquides (eau, huile) et/ou gazeux (air ou gaz naturel), se présentant le plus souvent sous la forme d'émulsions et/ou de suspensions contenant d'autres additifs minéraux et organiques, comme par exemple des argiles, des polymères, des tensioactifs, des déblais et/ou des ciments.

Pendant l'opération de forage, le fluide de forage est mis en circulation continue tant dans la zone de fracturation de la roche qu'en surface. Il est préparé dans des bacs à boues, puis injecté à l'intérieur des tiges jusqu'à l'outil de coupe, et il remonte dans l'espace annulaire, chargé des déblais formés au front de taille. A la sortie du puits, le fluide de forage subit différents traitements, comme par exemple des étapes de tamisage, de dilution, d'ajout d'additifs chimique, dans le but d'éliminer les déblais transportés et de réajuster ses caractéristiques physico-chimiques à leurs valeurs initiales avant sa réutilisation. Le fluide de forage a pour fonctions :

- D'assurer la remontée des déblais du fond du puits jusqu'à la surface, par sa circulation dans l'espace annulaire de l'outil de coupe,
- De maintenir les déblais en suspension, lors d'un éventuel arrêt de sa circulation afin d'empêcher leur sédimentation, qui pourrait endommager l'outil de coupe lors de son redémarrage,
- De refroidir et de lubrifier l'outil de coupe afin d'éviter l'usure rapide des pièces métalliques en mouvement le constituant, et
- De maintenir les parois du puits dans un état stable de par sa densité et de par sa capacité à former sur la paroi une barrière limitant les transferts d'autres fluides, provenant des formations rocheuses traversées, vers l'annulaire de forage.

Le fluide de forage doit de plus être :

- Non corrosif et non abrasif vis-à-vis des outils de forage avec lesquels il est en contact,
- Non toxique ni dangereux pour le personnel qui le met en œuvre ;
- Non dangereux pour l'environnement.

Les fluides de forage sont soit à base d'huile soit à base d'eau.

Les fluides de forage à base d'huile sont des fluides dont la phase continue est une huile minérale (pétrole brut, fuel, gazole, ...) et la phase dispersée de l'eau. Jusqu'à récemment, le gazole a été la phase continue la plus fréquemment utilisée pour préparer des fluides de forage à base d'huile. Les contraintes environnementales actuelles imposent sa substitution par des huiles minérales ou synthétiques exemptes de composés aromatiques. De plus ces mêmes contraintes accélèrent le remplacement des fluides de forage à base d'huile par des fluides de forage aqueux.

Les fluides de forage à base d'eau, dits fluides de forages aqueux, sont des fluides de forage dont la phase continue est de l'eau qui selon les conditions d'utilisation peut-être de l'eau douce, de l'eau de mer, des saumures ou leurs mélanges, et la phase dispersée est une huile et/ou un ou plusieurs solides de nature minérale. Ils comprennent aussi une quantité importante de sels inorganiques et/ou organiques ainsi que différents additifs dont la constitution est susceptible d'apporter au fluide de forage à base d'eau une quantité de sels inorganiques et/ou organiques supplémentaire.

Cependant, ces fluides de forage aqueux, ne sont intrinsèquement lubrifiants. Pour éviter qu'ils provoquent l'usure prématurée de l'outil de forage ou son blocage, il est nécessaire d'y incorporer un agent lubrifiant comme les matières grasses.

Le brevet américain US 5,837,655 divulgue ainsi des fluides de forage à base d'eau comprenant des paraffines linéaires et/ou branchées et/ou cycliques comportant de 8 à 28 atomes de carbone.

La demande internationale publiée sous le numéro WO 2007/146067 A2 divulgue l'utilisation de phases grasses comprenant des mono-alkyl esters d'acide gras, répondant à la définition de « B100 biodiesel » selon la norme ASTM Standard No D6751-07a, pour préparer des fluides de forage aqueux de façon à leur conférer notamment des propriétés lubrifiantes.

La demande de brevet américain publiée sous le numéro US 2005/0197255 A1 divulgue l'utilisation de sels métalliques d'acides gras, comme par exemple l'acide stéarique, comme agent lubrifiant pour préparer des fluides de forage aqueux pouvant contenir des saumures.

La demande internationale publiée sous le numéro WO 00/29519 A1 divulgue des fluides de forage aqueux comprenant pour améliorer leur caractère lubrifiant, une composition à base d'huiles, d'un tensioactif non ionique comme par exemple un glycol polyalkoxylé, d'un ester et d'un polypropylène glycol.

Le brevet américain US 5,007,489 divulgue des fluides de forage aqueux comprenant de l'eau ou une saumure, des polyglycols insolubles dans l'eau de poids moléculaires compris entre 1.200 et 10.000 g.mol$^{-1}$, au moins un agent émulsionnant et un agent hydrotrope.

Cependant, les agents lubrifiants précédemment décrits sont insolubles ou très faiblement solubles dans l'eau et dans les saumures, ce qui rend difficile leur mise en œuvre en dispersion et ce qui induit des phénomènes de déphasage au stockage desdits fluides de forage aqueux.

Pour améliorer la dispersion de ces matières grasses utilisées comme agents lubrifiants pour la préparation de fluides de forage à base d'eau, on utilise de préférence des agents tensioactifs. Le brevet américain publié sous le numéro US 5,807,811 divulgue ainsi l'utilisation de matières grasses consistant en un mélange de triglycérides, d'acides carboxyliques gras et d'oléfines en présence d'un ester de phosphite et d'un émulsionnant dérivé de l'acide succinique, se présentant sous la forme d'une émulsion de type huile-dans-eau, dont la stabilité au stockage est limitée dans le temps.

La demande de brevet américain publiée sous le numéro US 2003/0232726 A1 divulgue un procédé de forage de formations souterraines mettant en œuvre un fluide de forage aqueux comprenant des silicates et un agent lubrifiant comprenant comme matières grasses des alcools faiblement hydrosolubles, choisis de préférence parmi les éléments du groupe constitué par le 2-octyldodécanol, l'alcool oléique, l'alcool stéarylique et les polyétherglycols (PEG), et un alkylpolyglycoside, choisi de préférence parmi les éléments du groupe constitué par le butylglucoside, l'hexylglucoside, le 2-éthylhexyl glucoside. Cependant, ni ces compositions, ni les fluides de forage aqueux en comprenant ne sont stables au stockage, car on observe un déphasage dès que l'on cesse de les agiter. Il existe donc un besoin de disposer d'une composition :

- qui reste homogène après une période de stockage,
- qui montre des propriétés lubrifiantes performantes,
- qui possède des propriétés inhibitrices de gonflement des argiles,

comme additif aux fluides de forage aqueux.

C'est pourquoi l'invention a pour un objet un procédé de forage de cavités dans des formations souterraines, ledit procédé comprenant une étape d'évacuation des déblais de forage desdites formations souterraines par injection dans le puits de forage d'une composition aqueuse (C) comprenant pour 100% de sa masse :

- De 1% à 65% massique d'au moins un sel (S) constitué par au moins un cation choisi parmi l'ion ammonium et les cations métalliques, et au moins un anion choisi parmi les ions chlorure, bromure, carbonate, bicarbonate, hydrogénocarbonate, silicate, métasilicate, sulfate, hydrogénosulfate, borate, tétraborate, dihydrogénoborate, hydrogénoborate, hydrogénotétraborate, ou les anions organiques portant une fonction carboxylate ;
- De 0,05% à 2% massique d'au moins un agent anti-mousse,
- De 13% à 97,95% massique d'eau et
- De 1% à 20% massique d'une composition (C$_2$) comprenant pour 100% de sa masse :

    - Optionnellement, de 0,1% à 30% massique d'au moins un agent auxiliaire choisi parmi les éléments du groupe constitué par l'érythritol, le xylitol, le sorbitol, le gluconate de sodium, le glucose et les maltodextrines ;
    - De 50% à 100% massique d'un système tensioactif (TA) consistant pour 100% de sa masse en un mélange :

        - De 25% à 78% massique d'une composition (C$_1$) représentée par la formule (I) :

$$R_1\text{-}O\text{-}(G_1)_p\text{-}H \qquad (I)$$

dans laquelle R$_1$ représente le radical heptyle,

- De 20% à 50% massique d'une composition $(C_1)$ représentée par la formule (I) dans laquelle $R_1$ représente le radical décyle,
- De 1% à 15% massique d'une composition $(C_1)$ représentée par la formule (I) dans laquelle $R_1$ représente le radical dodécyle, et
- De 1% à 10% massique d'une composition $(C_1)$ représentée par la formule (I) dans laquelle $R_1$ représente le radical tétradécyle,

avec dans la formule (I) $G_1$ représentant le reste d'un sucre réducteur et p représente un nombre décimal supérieur ou égal à 1,05 et inférieur ou égal à 5, ladite composition $(C_1)$ consistant en un mélange de composés représentés par les formules $(I_1)$, $(I_2)$, $(I_3)$, $(I_4)$ et $(I_5)$

$$R_1\text{-O-}(G_1)_1\text{-H} \qquad (I_1),$$

$$R_1\text{-O-}(G_1)_2\text{-H} \qquad (I_2),$$

$$R_1\text{-O-}(G_1)_3\text{-H} \qquad (I_3),$$

$$R_1\text{-O-}(G_1)_4\text{-H} \qquad (I_4),$$

$$R_1\text{-O-}(G_1)_5\text{-H} \qquad (I_5),$$

dans les proportions molaires respectives $a_1$, $a_2$, $a_3$, $a_4$ et $a_5$, telles que la somme : $a_1 + a_2 + a_3 + a_4 + a_5$ est égale à 1 et la somme $a_1 + 2a_2 + 3a_3 + 4a_4 + 5a_5$ est égale à p ;
- Et de 0% à 50% massique d'au moins un alcool de formule (II) :

$$R_1\text{-OH} \qquad (II)$$

dans laquelle $R_1$ représente un radical aliphatique linéaire ou ramifié, saturé ou insaturé, comportant de 4 à 16 atomes de carbone.

Selon une alternative l'invention a pour objet un procédé de forage de cavités dans des formations souterraines, ledit procédé comprenant une étape d'évacuation des déblais de forage desdites formations souterraines par injection dans le puits de forage d'une composition aqueuse (C) comprenant pour 100% de sa masse :

- De 1% à 65% massique d'au moins un sel (S) constitué par au moins un cation choisi parmi l'ion ammonium et les cations métalliques, et au moins un anion choisi parmi les ions chlorure, bromure, carbonate, bicarbonate, hydrogénocarbonate, silicate, métasilicate, sulfate, hydrogénosulfate, borate, tétraborate, dihydrogénoborate, hydrogénoborate, hydrogénotétraborate, ou les anions organiques portant une fonction carboxylate ;
- De 0,05% à 2% massique d'au moins un agent anti-mousse,
- De 13% à 97,95% massique d'eau et
- De 1% à 20% massique d'une composition $(C_2)$ comprenant pour 100% de sa masse :

  - Optionnellement, de 0,1% à 30% massique d'au moins un agent auxiliaire choisi parmi les éléments du groupe constitué par l'érythritol, le xylitol, le sorbitol, le gluconate de sodium, le glucose et les maltodextrines ;
  - De 50% à 100% massique d'un système tensioactif (TA) consistant pour 100% de sa masse en un mélange :

    - De 25% à 78% massique d'une composition $(C_1)$ représentée par la formule (I) :

$$R_1\text{-O-}(G_1)_p\text{-H} \qquad (I)$$

dans laquelle $R_1$ représente le radical 2-éthyl hexyle,
    - De 20% à 50% massique d'une composition $(C_1)$ représentée par la formule (I) dans laquelle $R_1$ représente le radical décyle,
    - De 1% à 15% massique d'une composition $(C_1)$ représentée par la formule (I) dans laquelle $R_1$ représente le radical dodécyle, et
    - De 1% à 10% massique d'une composition $(C_1)$ représentée par la formule (I) dans laquelle $R_1$ représente le radical tétradécyle,

avec dans la formule (I) $G_1$ représentant le reste d'un sucre réducteur et p représente un nombre décimal supérieur ou égal à 1,05 et inférieur ou égal à 5, ladite composition $(C_1)$ consistant en un mélange de composés représentés par les formules $(I_1)$, $(I_2)$, $(I_3)$, $(I_4)$ et $(I_5)$

$$R_1\text{-}O\text{-}(G_1)_1\text{-}H \qquad (I_1),$$

$$R_1\text{-}O\text{-}(G_1)_2\text{-}H \qquad (I_2),$$

$$R_1\text{-}O\text{-}(G_1)_3\text{-}H \qquad (I_3),$$

$$R_1\text{-}O\text{-}(G_1)_4\text{-}H \qquad (I_4),$$

$$R_1\text{-}O\text{-}(G_1)_5\text{-}H \qquad (I_5),$$

dans les proportions molaires respectives $a_1$, $a_2$, $a_3$, $a_4$ et $a_5$, telles que la somme : $a_1 + a_2 + a_3 + a_4 + a_5$ est égale à 1 et la somme $a_1 + 2a_2 + 3a_3 + 4a_4 + 5a_5$ est égale à p ;

- Et de 0% à 50% massique d'au moins un alcool de formule (II) :

$$R_1\text{-}OH \qquad (II)$$

dans laquelle $R_1$ représente un radical aliphatique linéaire ou ramifié, saturé ou insaturé, comportant de 4 à 16 atomes de carbone.

Dans le procédé tel que défini ci-dessus, la composition aqueuse (C) est généralement préparée préalablement à sa mise en œuvre, puis stockée dans des cuves avant d'être injectée en tête de puits à travers un système de tiges et de masse-tiges. La composition (C) ressort ensuite de l'extrémité de la tige de forage pour tomber au fond du puits où le trépan fore la formation rocheuse, puis remonte à la surface par l'espace annulaire compris entre la tige de forage et les parois du puits, en entrainant les morceaux de roches de la formation souterraine, appelés « déblais », qui ont été arrachés par l'outil de forage. Les déblais sont ensuite séparés de la composition (C) pour être évacués.

Selon un aspect particulier du procédé tel que défini précédemment, la composition aqueuse (C) comprend pour 100% de sa masse :

- De 1% à 50% massique d'au moins un sel (S) tel que défini ci-dessus,
- De 0,1% à 2% massique d'au moins un agent anti-mousse,
- De 39,9% à 97,9% massique d'eau et
- De 1% à 10% massique d'une composition $(C_2)$ telle que définie ci-dessus.

Selon un aspect plus particulier du procédé tel que défini précédemment, la composition aqueuse (C) comprend pour 100% de sa masse :

- De 5% à 40% massique d'au moins un sel (S) tel que défini ci-dessus,
- De 0,1% à 2% massique d'au moins un agent anti-mousse,
- De 53% à 93,9% massique d'eau.
- De 1% à 5% massique d'une composition $(C_2)$ telle que définie ci-dessus,

Selon un aspect particulier du procédé tel que défini précédemment, ladite composition $(C_2)$ comprend pour 100% de sa masse :

- Une proportion massique en ledit système tensioactif (TA), supérieure ou égale à 90% et inférieure à 100% et
- Une proportion massique en ledit alcool de formule (II) supérieure à 0% et inférieure ou égale à 10.

Selon un aspect plus particulier du procédé tel que défini précédemment, la composition $(C_2)$ comprend pour 100% de sa masse :

- Une proportion massique en ledit système tensioactif (TA), supérieure ou égale à 95% et inférieure à 100% et
- Une proportion massique en ledit alcool de formule (II) supérieure à 0% et inférieure ou égale à 5%.

Selon un aspect encore plus particulier du procédé tel que défini précédemment, la composition $(C_2)$ comprend pour 100% de sa masse :

**EP 2 895 572 B1**

- Une proportion massique en ledit système tensioactif (TA), supérieure ou égale à 98% et inférieure à 100% et
- Une proportion massique en ledit alcool de formule (II) supérieure à 0% et inférieure ou égale à 2%.

Par sucre réducteur, on désigne dans la définition de la composition $(C_1)$ représentée par la formule (I), les dérivés saccharidiques sans liaison glycosidique établie entre un carbone anomérique et l'oxygène d'un groupement acétal, tels qu'ils sont définis dans l'ouvrage de référence : "Biochemistry, Daniel Voet/Judith G. Voet, p. 250, John Wyley & Sons, 1990."

La structure oligomérique $(G_1)_p$, peut se présenter sous toutes formes d'isoméries, qu'il s'agisse d'isomérie optique, d'isomérie géométrique ou d'isomérie de position ; elle peut aussi représenter un mélange d'isomères.

Dans la formule (I) telle que définie ci-dessus, le groupe $R_1$ est lié à $G_1$ par le carbone anomérique du reste saccharide, de manière à former une fonction acétal.

Selon un aspect particulier du procédé tel que défini précédemment, dans la formule (I) $G_1$ représente le reste d'un sucre réducteur choisi parmi les restes du glucose, du dextrose, du saccharose, du fructose, de l'idose, du gulose, du galactose, du maltose, de l'isomaltose, du maltotriose, du lactose, du cellobiose, du mannose, du ribose, du xylose, de l'arabinose, du lyxose, de l'allose, de l'altrose, du dextrane ou du tallose.

Selon un aspect plus particulier du procédé tel que défini précédemment, dans la formule (I) $G_1$ représente le reste d'un d'un sucre réducteur choisi parmi les reste du glucose, du xylose et de l'arabinose.

Selon un autre aspect plus particulier du procédé dans la formule (I), p représente un nombre décimal supérieur ou égal à 1,05 et inférieur ou égal à 2,5, plus particulièrement supérieur ou égal à 1,05 et inférieur ou égal à 2,0, et encore plus particulièrement supérieur ou égal à 1,25 et inférieur ou égal à 2,0.

Dans le procédé tel que définit précédemment et objet de l'invention, par radical aliphatique, saturé ou insaturé, linéaire ou ramifié, comportant de 4 à 16 atomes de carbone, on désigne plus particulièrement $R_1$ dans les formules (I) et (II) telles que définies ci-dessus :

- Un radical alkyle linéaire, par exemple le radical butyle ($n\text{-}C_4H_9\text{-}$), hexyle ($n\text{-}C_6H_{13}\text{-}$), heptyle ($n\text{-}C_7H_{15}\text{-}$), octyle ($n\text{-}C_8H_{17}\text{-}$), décyle ($n\text{-}C_{10}H_{21}\text{-}$), dodécyle ($n\text{-}C_{12}H_{25}\text{-}$), tétradécyle ($n\text{-}C_{14}H_{29}\text{-}$) ou n-hexadécyle ($n\text{-}C_{16}H_{32}\text{-}$) ;
- Un radical alkyle ramifié issu des iso-alcanols de formule (1) :

$$(CH_3)(CH_3)CH\text{-}(CH_2)_r\text{-}CH_2\text{-}OH \qquad (1)$$

dans laquelle r représente un nombre entier compris entre 0 et 12, par exemple le radical iso-octyle, isononyle, isodécyle, iso-undécyle, isododécyle, isotridécyle ou isotétradécyle ;
- Le radical 2-éthyl hexyle ($C_4H_9\text{-}CH(C_2H_5)\text{-}CH_2\text{-}$) ou un radical alkyle ramifié issu d'un alcool de Guerbet de formule (2) :

$$CH(C_sH_{2s+1})(C_tH_{2t+1})\text{-}CH_2\text{-}OH \qquad (2)$$

dans laquelle t est un nombre entier compris entre 2 et 12, s est un nombre entier compris entre 2 et 12 et la somme s + t est supérieure ou égale à 4, et inférieure ou égale à 14, par exemple le radical 2-éthyl décyle, 2-butyl octyle, 2-éthyl dodécyle, 2-butyl décyle, 2-hexyl octyle, 2-butyl décyle, 2-hexyl décyle ou 2-butyl décyle ; ou un radical issu d'un homologue d'un alcool de Guerbet, par exemple le radical 2-propyl heptyle.
- Un radical alcényle linéaire, tel que le radical undécènyle, dodécènyle ou tétradécènyle, plus particulièrement le radical 10-undécènyle, 4-dodécènyle, ou 5-dodécènyle.

Selon un aspect particulier du procédé tel que défini précédemment, dans les formules (I) et (II), $R_1$ représente un radical alkyle choisi parmi les radicaux butyle ($n\text{-}C_4H_9\text{-}$), hexyle ($n\text{-}C_6H_{13}\text{-}$), heptyle ($n\text{-}C_7H_{15}\text{-}$), 2-éthyl hexyle, $[C_4H_9\text{-}CH(C_2H_5)\text{-}CH_2\text{-}]$, octyle ($n\text{-}C_8H_{17}\text{-}$), décyle ($n\text{-}C_{10}H_{21}\text{-}$), dodécyle ($n\text{-}C_{12}H_{25}\text{-}$), tétradécyle ($n\text{-}C_{14}H_{29}\text{-}$) ou hexadécyle ($n\text{-}C_{16}H_{32}\text{-}$).

Selon un aspect particulier du procédé tel que défini précédemment, ledit système tensioactif (TA) consiste pour 100% de sa masse en un mélange :

- De 70% à 95% massique d'une composition $(C_1)$ représentée par la formule (I) dans laquelle $R_1$ représente le radical décyle,
- De 2,5% à 20% massique d'une composition $(C_1)$ représentée par la formule (I) dans laquelle $R_1$ représente le radical dodécyle, et
- De 2,5% à 10% massique d'une composition $(C_1)$ représentée par la formule (I) dans laquelle $R_1$ représente le radical tétradécyle.

Par maltodextrines, on désigne dans la définition des agents auxiliaires optionnellement présents dans la composition $(C_2)$, les produits résultant de l'hydrolyse d'un amidon, constitué de différents sucres liés entre eux par des liaisons covalentes, comme par exemple le glucose, le maltose, le maltotriose, et dans des proportions relatives qui dépendent du degré de l'hydrolyse de l'amidon. Ce degré est mesuré et s'exprime en « dextrose équivalent » ou D.E. (le dextrose étant le D-glucose). Plus ce D.E. est élevé, plus l'hydrolyse est poussée et plus la proportion en sucres singuliers composant la maltodextrine est élevée. Dans le cadre de l'aspect particulier du procédé objet de la présente invention, les maltodextrines préférées sont les maltodextrines se caractérisant par un D.E. supérieur ou égal à 2 et inférieur ou égal à 20.

Selon un aspect encore plus particulier du procédé tel que défini précédemment, l'agent auxiliaire optionnellement compris dans la composition $(C_2)$ est le sorbitol.

La composition aqueuse (C) mise en œuvre dans le procédé objet de la présente invention, comporte optionnellement des ingrédients habituellement mis en œuvre dans le domaine des procédés de forage comme des solvants, des agents modificateurs de rhéologie, des agents inhibiteurs de gonflement des argiles destinés à inhiber le gonflement des argiles au contact de l'eau, des agents lubrifiants, des agents réducteurs de filtrat dont la fonction consiste à limiter les venues d'autres fluides, comme des venues d'eau, provenant des formations rocheuses traversées, vers l'annulaire de forage, des agents alourdissants qui ont pour fonction d'assurer au fluide forage une densité adaptée, des agents colmatants, des inhibiteurs d'hydrates de gaz.

Comme exemple de solvants optionnellement présents dans la composition (C) mise en œuvre dans le procédé objet de la présente invention, on peut citer par exemple le glycérol, le dipropylène glycol, l'hexylène glycol, le 1-2 propanediol, 1,3 propylène glycol, le mono propylène glycol, le DMSO ou les polyosides liquides.

Comme exemple d'agents modificateurs de rhéologie optionnellement présents dans la composition (C) mise en œuvre dans le procédé objet de la présente invention, on peut citer :

- Les hydrocolloïdes polymériques d'origine végétale ou biosynthétique, comme la gomme de xanthane, la gomme de karaya, les carraghénates, les alginates, les galacto-mannanes, la cellulose et ses dérivés ; l'amidon et ses dérivés hydrophiles ;
- Les homopolymères synthétiques préparés à partir d'acide acrylique et/ou de ses dérivés, d'acrylamide et/ou de ses dérivés, d'acide méthacrylique et/ou de ses dérivés, d'alcool vinylique et/ou ses dérivés, de l'acide 2-acrylamido-2-méthylpropanesulfonate ;
- Les copolymères anioniques synthétiques réticulés à base d'acide méthacrylique ou d'acide acrylique, ou d'esters de l'acide méthacrylique ou de l'acide acrylique, optionnellement hydrophiquement modifiés, préparés par polymérisation en émulsion directe. Ces copolymères anioniques synthétiques sont respectivement connus de l'homme du métier sous les appellations "Alcaline Swellable Emulsion" (ou "ASE") et "Hydrophobically Alcaline Swellable Emulsion" (ou "HASE"). Des agents épaississants de type "HASE" sont décrits dans la demande internationale publiée le 2 mai 2002 sous le numéro WO 02/34793 A2 ;
- Les polyélectrolytes anioniques synthétiques, réticulés ou branchés, qui sont des homopolymères ou des copolymères réticulés et/ou branchés de monomères insaturés hydrosolubles, comme l'acide acrylique et/ou ses dérivés, l'acide méthacrylique et/ou ses dérivés, l'acrylamide et/ou ses dérivés, l'acide 2-acrylamido-2-méthylpropanesulfonate, l'alcool vinylique et/ou ses dérivés. Ces polyélectrolytes anioniques synthétiques, réticulés ou branchés, se présentent sous la forme de latex inverses, obtenus par polymérisation radicalaire en émulsion inverse, ou sous la forme de poudres, obtenues par polymérisation précipitante ou par atomisation de latex inverses ;
- Les agents épaississants inorganiques comme les argiles, la montmorillonite (ou bentonite), la volchonskoite, la smectite, la nontronite, beidellite, l'hectorite, la saponite, la sauconite ou la vermiculite.

Comme exemple d'agents inhibiteurs de gonflement des argiles optionnellement présents dans la composition (C) mise en œuvre dans le procédé objet de la présente invention, on peut citer es polyéthylènes glycols de poids moléculaires compris entre $400 \, g.mol^{-1}$ et $10\,000 \, g.mol^{-1}$, les polyglycérols, les alcools alcoxylés, et plus particulièrement les alcools alcoxylés comportant de 3 à 6 atomes de carbone, comme par exemple le butanol éthoxylé commercialisé par la société Uniqema sous le nom de marque KEMEMLIX™7423X, le butanol éthoxylé et propoxylé commercialisé par la société Uniqema sous le nom de marque KEMELIX™ UG20WAN.

Comme exemple d'agents réducteurs de filtrat optionnellement présents dans la composition (C) mise en œuvre dans le procédé objet de la présente invention, on peut citer les amidons, les carboxyméthylcelluloses, les celluloses polyanioniques (PAC).

Comme exemple d'agents alourdissants optionnellement présents dans la composition (C) mise en œuvre dans le procédé objet de la présente invention, on peut citer le sulfate de baryum (ou « baryte »), le carbonate de calcium (ou « calcite »).

Comme exemple d'agents lubrifiant optionnellement présents dans la composition (C) mise en œuvre dans le procédé objet de la présente invention, on peut citer les acides gras alcoxylés comportant de 12 à 24 atomes de carbone, comme par exemple les huiles de colza éthoxylées avec de 3 à 50 moles d'oxyde d'éthylène, les esters méthyliques d'acides gras éthoxylés ; les savons d'acides gras comme par exemple le stéarate de sodium.

Comme exemple d'agents inhibiteurs d'hydrates de gaz optionnellement présents dans la composition (C) mise en œuvre dans le procédé objet de la présente invention, on peut citer les copolymères à base de vinyl-pyrrolidone, les alcools comme le méthanol, les sels comme par exemple les sels d'ammonium quaternaire.

La composition ($C_1$), représentée par la formule (I) telle que définie précédemment, est préparée par le procédé comportant:

- Une étape a) de réaction sous agitation mécanique, d'un sucre réducteur avec un excès d'alcool de formule (II) telle que définie précédemment, ou d'un mélange d'alcools de formule (II), généralement en présence d'un système catalytique acide, en maîtrisant le rapport stœchiométrique entre les deux réactants, dans des conditions de température et de vide partiel prédéterminées, par exemple à une température comprise entre 70°C et 130°C et sous un vide partiel compris entre 300 mbar ($3.10^4$ Pa) et 20 mbar ($2.10^3$ Pa), pour former un mélange de composés représentés par les formules ($I_1$), ($I_2$), ($I_3$), ($I_4$) et ($I_5$) telle que définies précédemment, et optionnellement d'un excès de l'alcool de formule (II) ou du mélange d'alcools de formule (II) ; si nécessaire ou si désiré
- Une étape b) d'élimination de l'alcool de formule (II), ou du mélange d'alcools de formule (II), n'ayant pas réagi au cours de l'étape a), si nécessaire ou si désiré,

Un tel procédé de préparation peut être complété, si nécessaire ou si désiré, par des opérations de neutralisation, de filtration et de décoloration.

Par système catalytique acide, on désigne, dans l'étape a) du procédé défini ci-dessus les acides forts comme l'acide sulfurique, l'acide chlorhydrique, l'acide phosphorique, l'acide nitrique, l'acide méthanesulfonique, l'acide (para-toluène) sulfonique, l'acide (trifluorométhane) sulfonique, ou les résines échangeuses d'ions.

Au cours de l'étape b) du procédé tel que défini ci-dessus, L'alcool de formule (II) ou le mélange d'alcools de formule (II) est éliminé selon des méthodes connues de l'homme du métier comme par exemple, par distillation, telle que la distillation dur film à couche mince, la distillation moléculaire ou l'extraction par solvants.

Un premier mode de préparation de ladite ($C_2$), telle que définie précédemment, consiste à mélanger la composition ($C_1$), ou un mélange de compositions ($C_1$), et un alcool de formule (II), telle que définie précédemment, ou un mélange d'alcools de formule (II), selon un rapport massique maîtrisé, et dans des conditions de température permettant d'assurer l'homogénéité du mélange.

Un deuxième mode de préparation de ladite composition ($C_2$), telle que définie précédemment, consiste à effectuer l'étape a) du procédé de préparation de ladite composition ($C_1$) tel que défini ci-dessus, puis si nécessaire, une étape b1) consistant à distiller partiellement, selon des méthodes connues de l'homme du métier, l'alcool de formule (II), ou le mélange d'alcools de formule (II), n'ayant pas réagi est mise en œuvre à l'issue de l'étape a) de façon à atteindre les teneurs massiques en composition (C1) et en alcool de formule (II), ou en mélange d'alcools de formule (II), souhaitées dans la composition ($C_2$). Alternativement ce deuxième mode de préparation de ladite composition ($C_2$) peut comprendre une étape b2) consistant à ajouter sous agitation une proportion massique déterminée d'un alcool de formule (II), ou d'un mélange d'alcool de formule (II), au mélange réactionnel obtenu à l'issue de l'étape a) de façon à atteindre les teneurs massiques souhaitées en composition ($C_1$) et en alcool de formule (II), ou en mélange d'alcools de formule (II), souhaitées dans la composition ($C_2$).

Selon un aspect particulier du procédé tel que défini précédemment, ladite composition ($C_2$) comprend pour 100% de sa masse :

- De 0,1% à 30% massique d'au moins un agent auxiliaire choisi parmi les éléments du groupe constitué par l'érythritol, le xylitol, le sorbitol, le gluconate de sodium, le glucose et les maltodextrines ;
- De 35% à 99,9% massique du dit tensioactif (TA) ; et
- De 0% à 35% massique d'au moins un alcool de formule (II). Selon un aspect plus particulier du procédé tel que défini précédemment et objet de l'invention, la composition ($C_2$) comprend pour 100% de sa masse :

  - De 65% à 99,9% massique d'un système tensioactif (TA) consistant en une composition ($C_1$) ou en un mélange de compositions ($C_1$),
  - De 0% à 5% massique d'au moins un alcool de formule (II)
  - De 0,1% à 30% massique d'au moins un agent auxiliaire choisi parmi les éléments du groupe constitué par l'érythritol, le xylitol, le sorbitol, le gluconate de sodium, le glucose et les maltodextrines.

Selon un autre aspect particulier du procédé tel que défini précédemment, le sel (S) est un sel choisi parmi les sels de sodium, de potassium, de calcium, de zinc, ou de césium.

Selon un autre aspect particulier du procédé tel que défini précédemment, le sel (S) est choisi parmi les sels des acides formique, acétique ou propanoïque et, plus particulièrement un sel de l'acide formique. Il s'agit tout particulièrement du formiate de césium.

Selon un autre aspect particulier du procédé tel que défini précédemment, le sel (S) est choisi parmi le chlorure de sodium, le chlorure de potassium, le chlorure de calcium, le carbonate de potassium, le bromure de calcium, le bromure de zinc, le silicate de sodium, le métasilicate de sodium ou le tétraborate de sodium.

Dans le procédé tel que défini précédemment et objet de l'invention, l'agent anti-mousse présent dans la composition aqueuse (C) est sélectionné parmi les agents anti-mousses connus de l'homme du métier et plus particulièrement parmi :

- Les alcools gras linéaires ou ramifiés, saturés ou insaturés, comportant de 8 à 32 atomes de carbone, et plus particulièrement les alcools gras linéaires ou ramifiés, saturés ou insaturés, comportant de 8 à 22 atomes de carbone,
- Les copolymères blocs d'oxyde d'éthylène et d'oxyde de propylène, et tout particulièrement les copolymères blocs d'oxyde d'éthylène et d'oxyde de propylène commercialisés sous le nom de marque PLURONIC™ par la société BASF, par exemple le PLURONIC™PE 6100 et le PLURONIC™PE 6200
- Les tensioactifs non ioniques de formule ($A_1$) :

$$R_2\text{-}X\text{-}[(CH_2\text{-}CH(CH_3)\text{-}O)_u\text{-}(CH_2\text{-}CH_2\text{-}O)_v\text{-}Y]_w \qquad (A_1)$$

dans laquelle :

- $R_2$ représente un radical aliphatique, saturé ou insaturé, linéaire ou ramifié, comportant de 6 à 18 atomes de carbone,
- X représente un atome d'azote ou un atome d'oxygène,
- v représente un nombre entier compris entre 1 et 50,
- u représente un nombre entier compris entre 1 et 50,
- w représente un nombre entier égal à 1 si X représente un atome d'oxygène, et w représente un nombre entier égal à 1 ou 2 si X représente un atome d'azote.
- Y représente un groupe fonctionnel bloquant choisi parmi les éléments du groupe constitué par les radicaux alkyles linéaires comportant de 4 à 8 atomes de carbone, comme par exemple le radical butyle, le radical benzyle, ou un groupe oxyde de butylène.

Parmi les tensioactifs non ioniques de formule ($A_1$), on peut citer les produits commercialisés sous le nom de marque TERGITOL™ par la société DOW CHEMICAL comme par exemple le TERGITOL™ L61E et le TERGITOL™ L64E, et les produits commercialisés sous le nom de marque PLURAFAC™ par la société BASF comme par exemple le PLURAFAC™LF 220 et le PLURAFAC™LF 221.

- Les dérivés d'huiles de silicone, plus particulièrement les polyméthylsiloxanes, et les polysiloxanes modifiés par des polyéthers.
- Les esters d'acides gras linéaires, provenant d'huiles végétales, et comportant de 12 à 22 atomes de carbone, et d'alcool à courtes chaînes comportant de 1 à 4 atomes de carbone, le laurate de méthyle, le myristate de méthyle, le palmitate de méthyle, le stéarate de méthyle, l'oléate de méthyle, le linoléate de méthyle, le linolénate de méthyle, l'arachidate de méthyle, le béhènate de méthyle, l'érucate de méthyle, ou leurs mélanges, par exemple les produits commercialisés sous le nom de marque ESTISOL™ par la société ESTICHEM, tels que l'ESTISOL™240.

L'invention a enfin pour objet un procédé de forage de cavités dans des formations souterraines, ledit procédé comprenant une étape d'évacuation des déblais de forage desdites formations souterraines par injection dans le puits de forage d'une composition aqueuse (C) comprenant pour 100% de sa masse :

- De 1% à 65% massique d'au moins un sel (S) constitué par au moins un cation choisi parmi l'ion ammonium et les cations métalliques, et au moins un anion choisi parmi les ions chlorure, bromure, carbonate, bicarbonate, hydrogénocarbonate, silicate, métasilicate, sulfate, hydrogénosulfate, borate, tétraborate, dihydrogénoborate, hydrogénoborate, hydrogénotétraborate, ou les anions organiques portant une fonction carboxylate ;
- De 0,05% à 2% massique d'au moins un agent anti-mousse,
- De 13% à 97,95% massique d'eau et
- De 1% à 20% massique d'une composition ($C_{21}$) comprenant pour 100% de sa masse :

  - De 5% à 100% massique d'un mélange ($M_1$) consistant en, pour 100% de sa masse :

- De 25% à 78% massique d'une composition ($C_1$) représentée par la formule (I) dans laquelle $R_1$ représente le radical heptyle ou le radical 2-éthyl hexyle,
- De 20% à 50% massique d'une composition ($C_1$) représentée par la formule (I) dans laquelle $R_1$ représente le radical décyle,
- De 1% à 15% massique d'une composition ($C_1$) représentée par la formule (I) dans laquelle $R_1$ représente le radical dodécyle, et
- De 1% à 10% massique d'une composition ($C_1$) représentée par la formule (I) dans laquelle $R_1$ représente le radical tétradécyle.

- De 0% à 95% massique d'eau.

## A- Préparation de compositions ($C_2$)

### A - 1) Composition ($C_2$) comprenant du n-heptylpolyglucoside

On introduit sous agitation, 2,7 équivalents molaires de n-heptanol dans un réacteur maintenu à 40°C. Un équivalent molaire de glucose anhydre y est ensuite ajouté, suivi de 0,15% massique d'acide sulfurique à 98% pour 100% massique du mélange. Le milieu réactionnel est placé sous vide partiel d'environ $0,18 \times 10^5$ Pa (180 mbar) est maintenu à 100°C-105°C pendant 4 heures avec distillation de l'eau formée. Après refroidissement à 85°C-90°C et neutralisation par ajout de soude à 40%, de sorte que le pH d'une solution à 5% de ce mélange soit égal à 7,0, le milieu réactionnel ainsi obtenu est vidangé à 70°C et filtré pour éliminer les grains de glucose n'ayant pas réagi. Le filtrat est ensuite introduit dans un autre réacteur. L'excès d'heptanol est alors distillé sous vide partiel, puis le résidu dilué dans l'eau pour obtenir une solution à 60% massique. Après agitation pendant 30 minutes à 50°C, la composition obtenue, dénommée ci-après ($X_0$), comprenant 40% d'eau et 60% de n-heptylpolyglucoside, est vidangée.

### A - 2) Composition ($C_2$) comprenant du n-décylpolyglucoside, du n-dodécylpolyglucoside et du n-tétradécyl-polyglucoside

On introduit sous agitation, 4,0 équivalents molaires d'un mélange ($N_1$) constitué pour 100% de sa masse de 85% massique de n-décylpolyglucoside, de 10% massique de n-dodécylpolyglucoside et de 5% massique de n-tétradécylpolyglucoside, dans un réacteur maintenu à 80°C. Un équivalent molaire de glucose anhydre y est ensuite ajouté, suivi de 0,15% massique d'acide sulfurique à 98% pour 100% massique du mélange. Le milieu réactionnel est placé sous vide partiel d'environ $0,18 \times 10^5$ Pa (180 mbar) est maintenu à 100°C-105°C pendant 4 heures avec distillation de l'eau formée. Après refroidissement à 85°C-90°C et neutralisation par ajout de soude à 40%, de sorte que le pH d'une solution à 5% de ce mélange soit égal à 7,0, le milieu réactionnel ainsi obtenu est vidangé à 70°C et filtré pour éliminer les grains de glucose n'ayant pas réagi. Le filtrat est ensuite introduit dans un autre réacteur. L'excès du mélange d'alcool ($N_1$) est ensuite éliminé par distillation en utilisant un évaporateur film couche mince, puis le résidu dilué dans l'eau pour obtenir une solution à 55% massique. Après agitation pendant 30 minutes à 50°C, la composition obtenue, dénommée ci-après ($X_1$), comprenant 45% d'eau et et 55% du mélange de n-décylpolyglucoside, n-dodécylpolyglucoside et n-tétradécylpolyglucoside, est vidangée.

### A - 3) Composition ($C_2$) comprenant du 2-éthylhexylpolyglucoside

On introduit sous agitation, 4,0 équivalents molaires de 2-éthyl hexanol-1 dans un réacteur maintenu à 80°C. Un équivalent molaire de glucose anhydre y est ensuite ajouté, suivi de 0,15% massique d'acide sulfurique à 98% pour 100% massique du mélange. Le milieu réactionnel est placé sous vide partiel d'environ $0,18 \times 10^5$ Pa (180 mbar) est maintenu à 100°C-105°C pendant 4 heures avec distillation de l'eau formée. Après refroidissement à 85°C-90°C et neutralisation par ajout de soude à 40%, de sorte que le pH d'une solution à 5% de ce mélange soit égal à 7,0, le milieu réactionnel ainsi obtenu est vidangé à 70°C et filtré pour éliminer les grains de glucose n'ayant pas réagi. Le filtrat est ensuite introduit dans un autre réacteur. L'excès de 2-éthyl hexanol-1 est ensuite éliminé par distillation en utilisant un évaporateur film couche mince, puis le résidu dilué dans l'eau pour obtenir une solution à 55% massique. Après agitation pendant 30 minutes à 50°C, la composition obtenue, dénommée ci-après ($X_2$), comprenant 45% d'eau et 55% de 2-éthylhexylpolyglucoside, est vidangée.

### A - 4) Composition ($C_2$) comprenant du n-heptylpolyglucoside, du n-décylpolyglucoside, du n-dodécylpolyglucoside et du n-tétradécyl-polyglucoside.

On introduit 100 grammes de la composition ($X_0$) et 109,1 grammes de la composition ($X_1$) dans un réacteur

maintenu à 40°C. Le mélange est agité pendant 30 minutes, puis la composition obtenue, dénommée ci-après ($X_3$), est vidangée.

**A - 5) Composition ($C_2$) comprenant du 2-éthylhexyl-polyglucoside, du n-décylpolyglucoside, du n-dodécylpolyglucoside et du n-tétradécylpolyglucoside.**

On introduit 100 grammes de la composition ($X_2$) et 100 grammes de la composition ($X_1$) dans un réacteur maintenu à 40°C. Le mélange est agité pendant 30 minutes, puis la composition obtenue, dénommée ci-après ($X_4$), est vidangée.

**A - 6) Composition ($C_2$) comprenant du n-heptylpolyglucoside, du n-décylpolyglucoside, du n-dodécylpolyglucoside, du n-tétradécylpolyglucoside et du sorbitol.**

On introduit 139,37 grammes de la composition ($X_3$) et 28,57 grammes d'une solution de sorbitol à 70% dans un réacteur maintenu à 40°C. Le mélange est agité pendant 30 minutes, puis la composition obtenue, dénommée ci-après ($X_5$), est vidangée.

**A - 7) Composition selon l'état de la technique comprenant du 2-éthylhexyl-polyglucoside et du 2-octyl dodécanol ($X_6$).**

On introduit 36,4 grammes de la composition ($X_2$) et 80 grammes de 2-octyldodécanol dans un réacteur dans un réacteur maintenu à 40°C. Le mélange est agité pendant 30 minutes, puis la composition ($X_6$) obtenue est vidangée.
Les proportions, en pourcentages massiques, des constituants des compositions (Xo), ($X_1$), ($X_2$), ($X_3$), ($X_4$), ($X_5$) et ($X_6$) ainsi obtenues sont consignées dans le tableau 1 ci-dessous.

Tableau 1

|  | ($X_0$) | ($X_1$) | ($X_2$) | ($X_3$) | ($X_4$) | ($X_5$) | ($X_6$)[(1)] |
|---|---|---|---|---|---|---|---|
| n-heptylpolyglucoside | 100 | 0 | 0 | 50 | 0 | 40 | 0 |
| n-décylpolyglucoside | 0 | 85 | 0 | 42,5 | 42,5 | 34 | 0 |
| n-dodécylpolyglucoside | 0 | 10 | 0 | 5 | 5 | 4 | 0 |
| n-tétradécylpolyglucoside | 0 | 5 | 0 | 2,5 | 2,5 | 2 | 0 |
| 2-éthylhexylpolyglucoside | 0 | 0 | 100 | 0 | 50 | 0 | 20 |
| sorbitol | 0 | 0 | 0 | 0 | 0 | 20 | 0 |
| 2-octyl dodécanol | 0 | 0 | 0 | 0 | 0 | 0 | 80 |
| (1) : ($X_6$) est divulgué dans la demande de brevet américain publiée sous le numéro US 2003/0232726 A1. | | | | | | | |

**B- Préparation de compositions (C) mises en œuvre dans le procédé selon l'invention**

**B -1) Compositions (C) dans lesquelles le sel (S) est le chlorure de calcium**

Chacune des compositions est préparée selon le même mode opératoire suivant :

-      La quantité d'eau souhaitée est introduite sous agitation dans un réacteur maintenu à 10°C ; suivie de la quantité de chlorure de calcium souhaitée puis le mélange résultant agité pendant 30 minutes. Les autres ingrédients sont alors ajoutés successivement à 20°C et le tout agité jusqu'à obtention d'une solution limpide.

Les proportions, en pourcentage massiques, des constituants des compositions (C) ainsi obtenues, dénommées ci-après ($F_{13}$), ($F_{14}$), ($F_{15}$), ($F_{16}$) et ($F_{17}$), ainsi que des compositions ($F_{11}$), ($F_{12}$) et ($F_{18}$), selon l'état de la technique, sont consignées dans le tableau 2 ci-dessous.

Tableau 2

| | (F$_{11}$) | (F$_{12}$) | (F$_{13}$) | (F$_{14}$) | (F$_{15}$) | (F$_{16}$) | (F$_{17}$) | (F$_{18}$) |
|---|---|---|---|---|---|---|---|---|
| CaCl$_2$ | 35 | 35 | 35 | 35 | 35 | 35 | 35 | 35 |
| Eau | 59,8 | 59,8 | 59,8 | 59,8 | 59,8 | 59,8 | 59,8 | 59,8 |
| Estisol™ 240 [(1)] | 0,2 | 0,2 | 0,2 | 0,2 | 0,2 | 0,2 | 0,2 | 0,2 |
| PEG 300 [(2)] | 5 | 0 | 0 | 0 | 0 | 0 | 0 | 0 |
| PEG 6000 [(2)] | 0 | 5 | 0 | 0 | 0 | 0 | 0 | 0 |
| (X$_1$)[(2)] | 0 | 0 | 5 | 0 | 0 | 0 | 0 | 0 |
| (X$_2$)[(2)] | 0 | 0 | 0 | 5 | 0 | 0 | 0 | 0 |
| (X$_0$)[(2)] | 0 | 0 | 0 | 0 | 5 | 0 | 0 | 0 |
| (X$_3$)[(2)] | 0 | 0 | 0 | 0 | 0 | 5 | 0 | 0 |
| (X$_5$)[(2)] | 0 | 0 | 0 | 0 | 0 | 0 | 5 | 0 |
| (X$_6$)[(2)] | 0 | 0 | 0 | 0 | 0 | 0 | 0 | 5 |
| (1) : Estisol™ 240 est un agent anti-mousse commercialisé par la société Estichem.<br>(2) : La teneur en agent lubrifiant est exprimée en pourcentage massique de son extrait sec. | | | | | | | | |

**B - 2) Compositions (C) dans lesquelles le sel (S) est le chlorure de potassium**

Chacune des compositions est préparée selon le même mode opératoire suivant :

- La quantité d'eau souhaitée est introduite sous agitation dans un réacteur maintenu à 20°C ; suivie de la quantité de chlorure de potassium souhaitée puis le mélange résultant agité pendant 30 minutes. Les autres ingrédients sont alors ajoutés successivement à 20°C et le tout agité jusqu'à obtention d'une solution limpide.

Les proportions, en pourcentages massiques, des constituants des compositions (C) ainsi obtenues, dénommées ci-après (F$_{22}$), (F$_{23}$), (F$_{24}$), (F$_{25}$), (F$_{26}$) et (F$_{27}$) ainsi que de la composition (F$_{21}$) selon l'état de la technique, sont consignées dans le tableau 3 ci-dessous.

Tableau 3

| | (F$_{21}$) | (F$_{22}$) | (F$_{23}$) | (F$_{24}$) | (F$_{25}$) | (F$_{26}$) | (F$_{27}$) |
|---|---|---|---|---|---|---|---|
| KCl | 20 | 20 | 20 | 20 | 20 | 20 | 20 |
| Estisol™ 240 | 0,2 | 0,2 | 0,2 | 0,2 | 0,2 | 0,2 | 0,2 |
| Eau | 74,8 | 74,8 | 74,8 | 74,8 | 74,8 | 74,8 | 74,8 |
| PEG 300 [(1)] | 5 | 0 | 0 | 0 | 0 | 0 | 0 |
| (X$_1$) [(1)] | 0 | 5 | 0 | 0 | 0 | 0 | 0 |
| (X$_2$) [(1)] | 0 | 0 | 5 | 0 | 0 | 0 | 0 |
| (X$_0$) [(1)] | 0 | 0 | 0 | 5 | 0 | 0 | 0 |
| (X$_3$) [(1)] | 0 | 0 | 0 | 0 | 5 | 0 | 0 |
| (X$_4$) [(1)] | 0 | 0 | 0 | 0 | 0 | 5 | 0 |
| (X$_5$) [(1)] | 0 | 0 | 0 | 0 | 0 | 0 | 5 |
| (1) : la teneur en agent lubrifiant est exprimée en pourcentage massique de son extrait sec. | | | | | | | |

**B - 3) Compositions (C) dans lesquelles le sel (S) est un mélange de silicate de sodium et de carbonate de potassium**

Chacune des compositions (F$_{31}$), (F$_{32}$), (F$_{33}$) et F($_{34}$) est préparée selon le même mode opératoire suivant :

-    La quantité d'eau souhaitée est introduite sous agitation dans un réacteur maintenu à 20°C ; suivie des quantités de silicate de sodium et de carbonate de potassium souhaitées puis le mélange résultant agité pendant 30 minutes. Les autres ingrédients sont alors ajoutés successivement à 20°C et le tout agité jusqu'à obtention d'une solution limpide.

Les proportions, en pourcentages massiques, des constituants des compositions (C) ainsi obtenues, dénommées ci-après (F$_{32}$), (F$_{33}$) et (F$_{34}$) ainsi que de la composition (F$_{31}$) selon l'état de la technique, sont consignées dans le tableau 4 ci-dessous.

Tableau 4

|  | (F$_{31}$) [2] | (F$_{32}$) | (F$_{33}$) | (F$_{34}$) |
|---|---|---|---|---|
| Silicate de sodium | 5 | 5 | 5 | 5 |
| K$_2$CO$_3$ | 3 | 3 | 3 | 3 |
| Estisol™ 240 | 0,2 | 0,2 | 0,2 | 0,2 |
| Eau | 88,8 | 88,8 | 88,8 | 88,8 |
| (X$_6$)[1] | 3 | 0 | 0 | 0 |
| (X$_3$)[1] | 0 | 3 | 0 | 0 |
| (X$_4$)[1] | 0 | 0 | 3 | 0 |
| (X$_5$)[1] | 0 | 0 | 0 | 3 |

[1] : La teneur en agent lubrifiant est exprimée en pourcentage massique de son extrait sec.
[2] : La composition (F$_{31}$) est divulguée dans la demande de brevet américain publiée sous le numéro US 2003/0232726 A1.

**C - Etude de la stabilité des compositions (C)**

La stabilité des compositions (C) dont la préparation est exposée au paragraphe B) précédent ainsi que celle des compositions (F$_{11}$), (F$_{12}$), (F$_{18}$), (F$_{21}$) et (F$_{31}$) selon l'état de la technique a été étudiée comme suit :

-    Une quantité identique de chacune des compositions (C) a été conservée dans une enceinte climatique isolée et régulée à une température de 20°C pendant un mois, durée à l'issue de laquelle l'aspect de ces échantillons a été évalué.
-    Une quantité identique de chacune des compositions (C) a été conservée dans une enceinte climatique isolée et régulée à une température de 90°C pendant 16 heures pour évaluer leur vieillissement dans des conditions de forage en profondeur. L'aspect de chaque échantillon a été noté après une durée de 16 heures de conservation dans ces conditions.

Les résultats de ces évaluations sont consignés dans le tableau 5 ci-dessous ("Ho." : Aspect homogène; "He." : Aspect hétérogène).

|  | (F$_{11}$) | (F$_{12}$) | (F$_{13}$) | (F$_{14}$) | (F$_{15}$) | (F$_{16}$) | (F$_{17}$) | (F$_{18}$) |
|---|---|---|---|---|---|---|---|---|
| Aspect après un mois à 20°C | Ho. | Ho. | Ho. | Ho. | Ho. | Ho. | Ho. | Hé. |
| Aspect après 16h à 90°C | Ho. | Ho. | Ho. | Ho. | Ho. | Ho. | Ho. | Hé. |

Tableau 5

| | (F₂₁) | (F₂₂) | (F₂₃) | (F₂₄) | (F₂₅) | (F₂₆) | (F₂₇) |
|---|---|---|---|---|---|---|---|
| Aspect après un mois à 20°C | Ho. | Ho. | Ho. | Ho. | Ho. | Ho. | Ho. |
| Aspect après 16h à 90°C | Ho. | Ho. | Ho. | Ho. | Ho. | Ho. | Ho. |

Tableau 5 (suite)

| | (F₃₁) | (F₃₂) | (F₃₃) | (F₃₄) |
|---|---|---|---|---|
| Aspect après un mois à 20°C | Hé. | Ho. | Ho. | Ho. |
| Aspect après 16h à 90°C | Hé. | Ho. | Ho. | Ho. |

Tableau 5 (fin)

Ces évaluations font apparaître que les compositions (C) selon l'invention, présentent un aspect homogène dans les conditions de stockage des tests mis en œuvre, alors que les compositions $(F_{18})$ et $(F_{31})$, comprenant le système lubrifiant $(X_6)$ divulgué dans la demande de brevet américain publiée sous le numéro US 2003/0232726, présentent un aspect hétérogène dans les mêmes conditions de stockage.

**D - Evaluation du pouvoir lubrifiant des compositions (C).**

**D -1) Principe général de l'étude**

Le pouvoir lubrifiant est évalué à l'aide de l'appareil dénommé « E.P. (Extreme Pressure & Lubricity tester); 230V, 50 Hz Digital», commercialisé par la société OFITE (Instruction Manual Part 111-00-1), muni d'un anneau en rotation (référence OFITE 111-02) et d'un bloc fixe (référence OFITE 111-08). Les tests sont effectués selon les procédures recommandées par la norme RP 13B de l'Institut américain du pétrole (API), avec une vitesse de rotation de l'anneau de 60 tours par minute et avec les valeurs suivantes de moments de force appliqués entre l'anneau et le bloc fixe : 11,298 Nm (100 inch-pounds force) 16,948 Nm (150 inch-pounds force) et 22,597 Nm (200 inch-pounds force), selon les cas de figure. Dans ce système de mesure constant, plus la valeur du moment de force est élevée, plus la pression qui lui est associée sera élevée, et par conséquent, plus les forces de frottement sont intenses. Pour comparer les pouvoirs lubrifiants des différentes compositions :

- On note les lectures des graduations obtenues avec l'appareil de test ci-dessus décrit, correspondant à des valeurs relatives du couple de frottement entre l'anneau et le bloc ($V^{frot.}$) en présence desdites compositions dans les conditions expérimentales de test (le couple de frottement est une valeur sans unité, mesurée pour un moment de force spécifique exercé sur l'anneau par le bloc) ;
- On calcule la valeur d'un coefficient lubrifiant de la composition ($\lambda$) selon la formule suivante :

$$\lambda = (V^{frot.}/100) \times (V_{std.}^{frot.}/V_0^{frot.})$$

avec $V_{std.}^{frot.}$ représentant la valeur standard du couple de frottement de l'eau permutée qui, dans les conditions de mesures décrites, à savoir une vitesse de rotation de l'anneau de 60 tours/minute, est égale à 34 (manuel « Instruction Manual Part 111-00-1 de l'appareil E.P. (Extreme Pressure) & Lubricity tester ; 230V, 50 Hz Digital», commercialisé par la société OFITE) ; et $V_0^{frot.}$ la valeur expérimentale du couple de frottement de l'eau ;
- On calcule le pourcentage de réduction du couple de torsion ($\delta_{red}$), selon la formule suivante :

$$\delta_{red.} = [100 \times (\lambda_0 - \lambda)]/ \lambda_0$$

avec $\lambda_0$ représentant le coefficient lubrifiant de la base aqueuse.

Par « base aqueuse », on entend la solution comprenant de l'eau et la teneur en sel à la concentration massique souhaitée.

Selon le test expérimental décrit ci-dessus, plus la valeur relative du couple de frottement est faible, meilleur est le pouvoir lubrifiant de la composition testée.

L'amélioration du pouvoir lubrifiant d'une composition sera constatée:

- Lorsque la valeur relative du couple de frottement de la composition évaluée est plus faible que la valeur relative du couple de frottement de la base aqueuse telle que définie ci-dessus, et
- Par le pourcentage de réduction du couple de torsion de la composition évaluée.

**D - 2) Pouvoir lubrifiant de compositions à base de chlorure de calcium**

Les compositions $(F_{11})$, $(F_{12})$, $(F_{13})$, $(F_{14})$, $(F_{15})$, $(F_{16})$ et $(F_{17})$ sont évaluées par la procédure expérimentale décrite précédemment, avec une vitesse de rotation de l'anneau de 60 tours/minutes et une valeur de moment de force appliquée entre l'anneau et le bloc fixe de 11,298 Nm (100 inch-pound force) et comparées à de l'eau et à une solution aqueuse de chlorure de calcium à 35% massique (composition $T_1$).. Les résultats obtenus sont consignés dans le tableau 6 ci-dessous.

Tableau 6

|  | $V^{frot.}$ | $\lambda$ | $\delta_{red}$ |
|---|---|---|---|
| Eau | 32,4 | - | - |
| $(T_1)$ | 17,5 | 0,184 | - |
| $(F_{11})$ | 11,4 | 0,120 | 35% |
| $(F_{12})$ | 14,0 | 0,147 | 20% |
| $(F_{13})$ | 7,5 | 0,079 | 57% |
| $(F_{14})$ | 12,1 | 0,127 | 31% |
| $(F_{15})$ | 0,5 | 0,005 | 97% |
| $(F_{16})$ | 1,13 | 0,012 | 93% |
| $(F_{17})$ | 1,13 | 0,012 | 93% |

Ces résultats font apparaître que les compositions $(F_{13})$, $(F_{14})$, $(F_{15})$, $(F_{10})$ et $(F_{17})$, comprenant respectivement les compositions $(X_1)$, $(X_2)$, $(X_0)$, $(X_3)$ et $(X_5)$, présentent des valeurs relatives du couple de frottement significativement inférieure à la valeur du couple de frottement de la composition $(T_1)$.

De plus, les compositions $(F_{13})$, $(F_{15})$, $(F_{10})$ et $(F_{17})$, présentent un pourcentage de réduction du couple de torsion par rapport à la composition $(T_1)$, supérieur au pourcentage de réduction du couple de torsion des compositions $(F_{11})$ et $(F_{12})$ comprenant des lubrifiants décrits dans l'état de la technique (en l'occurrence, les PEG 300 et PEG 6000).

**D - 3) Pouvoir lubrifiant de compositions à base de chlorure de potassium**

D - 3.1) Compositions n'ayant pas subi de vieillissement accéléré

Les compositions $(F_{21})$, $(F_{22})$, $(F_{23})$, $(F_{24})$, $(F_{25})$, $(F_{26})$ et $(F_{27})$, sont évaluées par la procédure expérimentale décrite au paragraphe D - 1) précédent, avec une vitesse de rotation de l'anneau de 60 tours/minutes et des valeurs de moments de force appliqués entre l'anneau et le bloc fixe de 11,298 Nm (100 inch-pounds force) 16,948 Nm (150 inch-pound force) et 22,957 Nm (200 inch-pound force) et comparées à de l'eau et à une solution aqueuse de chlorure de potassium à 20% massique (composition $T_2$).

Les résultats obtenus sont consignés dans le tableau 7 ci-dessous.

Tableau 7

|  | 11,298 N.m | | | 16,948 Nm | | | 22,597 Nm | | |
|---|---|---|---|---|---|---|---|---|---|
|  | $V^{frot.}$ | $\lambda$ | $\delta_{red}$ | $V^{frot.}$ | $\lambda$ | $\delta_{red}$ | $V^{frot.}$ | $\lambda$ | $\delta_{red}$ |
| Eau | 34 | - | - | 34,0 | - | - | 33,6 | - | - |

(suite)

|  | 11,298 N.m | | | 16,948 Nm | | | 22,597 Nm | | |
|---|---|---|---|---|---|---|---|---|---|
|  | $V^{frot.}$ | $\lambda$ | $\delta_{red}$ | $V^{frot.}$ | $\lambda$ | $\delta_{red}$ | $V^{frot.}$ | $\lambda$ | $\delta_{red}$ |
| $(T_2)$ | 15,7 | 0,157 | - | 21,4 | 0,214 | - | 27,9 | 0,283 | - |
| $(F_{21})$ | 8,2 | 0,082 | 47% | 14,5 | 0,145 | 32% | 21,3 | 0,216 | 24% |
| $(F_{22})$ | 5,2 | 0,052 | 67% | 8,4 | 0,084 | 61% | 11,7 | 0,118 | 58% |
| $(F_{23})$ | 8,3 | 0,083 | 47% | 11,5 | 0,115 | 46% | 14,3 | 0,145 | 49% |
| $(F_{24})$ | 8,6 | 0,086 | 45% | 12,4 | 0,124 | 42% | 15,6 | 0,158 | 45% |
| $(F_{25})$ | 6,3 | 0,063 | 60% | 9,1 | 0,091 | 57% | 12,3 | 0,125 | 56% |
| $(F_{26})$ | 3,4 | 0,034 | 79% | 6,7 | 0,067 | 69% | 12,1 | 0,123 | 57% |
| $(F_{27})$ | 5,8 | 0,058 | 63% | 9,2 | 0,092 | 57% | 12,0 | 0,121 | 57% |

D - 3.2) Compositions avant subi un vieillissement accéléré

Des échantillons de chacune des compositions $(F_{21})$, $(F_{22})$, $(F_{23})$, $(F_{24})$, $(F_{25})$, $(F_{26})$ et $(F_{27})$, ont été placés dans un four à rouleaux à une température de 120°C pendant 16 heures pour obtenir les compositions respectivement référencées $(F'_{21})$, $(F'_{22})$, $(F'_{23})$, $(F'_{24})$, $(F'_{25})$, $(F'_{26})$ et $(F'_{27})$. Ces conditions de stockage permettent de simuler les conditions de températures subies par un fluide forage lors de sa mise en œuvre dans un procédé de forage en grande profondeur. Ces dernières compositions sont ensuite évaluées par la procédure expérimentale décrite au paragraphe D-1) précédent, avec une vitesse de rotation de l'anneau de 60 tours/minutes et des valeurs de moments de force appliqués entre l'anneau et le bloc fixe de 11,298 Nm (100 inch-pounds force) 16,948 Nm (150 inch-pound force) et 22,957 Nm (200 inch-pound force), et comparées à de l'eau et à la solution aqueuse $T_2$.
Les résultats obtenus sont consignés dans le tableau 8 ci-dessous.

Tableau 8

|  | 11,298 N.m | | | 16,948 Nm | | | 22,597 Nm | | |
|---|---|---|---|---|---|---|---|---|---|
|  | $V^{frot.}$ | $\lambda$ | $\delta_{red}$ | $V^{frot.}$ | $\lambda$ | $\delta_{red}$ | $V^{frot.}$ | $\lambda$ | $\delta_{red}$ |
| Eau | 34,0 | - | - | 34,0 | - | - | 34,0 | - | - |
| $(T_2)$ | 17,5 | 0,175 | - | 25,3 | 0,253 | - | 32,9 | 0,329 | - |
| $(F'_{21})$ | 11,1 | 0,111 | 37% | 15,6 | 0,156 | 38% | 22,3 | 0,223 | 32% |
| $(F'_{22})$ | 3,5 | 0,037 | 79% | 6,6 | 0,066 | 74% | 9,5 | 0,095 | 71% |
| $(F'_{23})$ | 7,4 | 0,075 | 55% | 11,5 | 0,115 | 55% | 15,1 | 0,151 | 55% |
| $(F'_{24})$ | 6,2 | 0,062 | 65% | 9,6 | 0,096 | 62% | 12,6 | 0,126 | 62% |
| $(F'_{25})$ | 2,3 | 0,023 | 87% | 5,8 | 0,058 | 77% | 12,8 | 0,128 | 61% |
| $(F'_{26})$ | 2 ,9 | 0,029 | 83% | 3,7 | 0,037 | 85% | 12,3 | 0,123 | 63% |
| $(F'_{27})$ | 4,5 | 0,045 | 74% | 8,8 | 0,088 | 65% | 12,6 | 0,126 | 65% |

D-3.3) Analyse des résultats.

Les compositions $(F_{22})$, $(F_{23})$, $(F_{24})$, $(F_{25})$, $(F_{26})$ et $(F_{27})$, comprenant respectivement les compositions $(X_1)$, $(X_2)$, $(X_0)$, $(X_3)$, $(X_4)$ et $(X_5)$, et n'ayant pas été préalablement soumises à des conditions de vieillissement accélérées, présentent des valeurs relatives du couple de frottement significativement inférieures à la valeur du couple de frottement de la composition $(T_2)$, quelle que soit la valeur de la pression exercée dans la mise en œuvre du test d'évaluation.
Pour une valeur de moment de force, appliqué entre l'anneau et le bloc fixe égale à 11,298 N.m, les compositions $(F_{22})$, $(F_{25})$, $(F_{26})$ et $(F_{27})$, présentent des valeurs relatives du couple de frottement significativement inférieures à la valeur du couple de frottement de la composition $(F_{21})$ comprenant un agent lubrifiant décrit dans l'état de la technique (PEG 300).

Pour une valeur de moment de force, appliqué entre l'anneau et le bloc fixe égale à 16,948 N.m, les compositions $(F_{22})$, $(F_{23})$, $(F_{24})$, $(F_{25})$, $(F_{26})$ et $(F_{27})$, présentent des valeurs relatives du couple de frottement significativement inférieures à la valeur du couple de frottement de la composition $(F_{21})$ comprenant un agent lubrifiant décrit dans l'état de la technique (PEG 300).

Pour des valeurs de moments de force appliqués entre l'anneau et le bloc fixe égales à soit 11,298 Nm à 16,948 Nm et à 22,597 Nm, les compositions $(F'_{22})$, $(F'_{23})$, $(F'_{24})$, $(F'_{25})$, $(F'_{26})$ et $(F'_{27})$, comprenant respectivement les compositions $(X_1)$, $(X_2)$, $(X_0)$, $(X_3)$, $(X_4)$ et $(X_5)$, et ayant été préalablement soumises à des conditions de vieillissement accélérées, présentent des valeurs relatives du couple de frottement significativement inférieures à la valeur du couple de frottement de la composition $(T_2)$ et à la valeur du couple de frottement de la composition $(F_{21})$ comprenant un agent lubrifiant décrit dans l'état de la technique (PEG 300).

De plus, pour des valeurs de moments de force appliqués entre l'anneau et le bloc égales à 11,298 Nm et à 16,948 N.m, les compositions $(F'_{22})$, $(F'_{23})$, $(F'_{24})$, $(F'_{25})$, $(F'_{26})$ et $(F'_{27})$, présentent des valeurs relatives du couple de frottement inférieures aux valeurs du couple de frottement des compositions respectives $(F_{22})$, $(F_{23})$, $(F_{24})$, $(F_{25})$, $(F_{26})$ et $(F_{27})$, alors que dans les mêmes conditions opératoires, la composition $(F'_{21})$ de l'état de la technique, ayant été préalablement soumise à des conditions de vieillissement accélérées, présente une valeur relative du couple de frottement supérieure à celle de la composition $(F_{21})$ n'ayant pas été soumise à de telles conditions de vieillissement.

**D - 4) Etude du pouvoir lubrifiant de compositions de forage à base de silicate de sodium.**

Les compositions $(F_{41})$ et $(F_{42})$ sont préparées selon le mode opératoire suivant :

- La quantité d'eau souhaitée est introduite sous agitation dans un réacteur maintenu à 60°C ; suivie des quantités de silicate de sodium et de chlorure de sodium souhaitées puis le mélange résultant agité pendant 30 minutes pour obtenir d'une solution limpide. Les quantités souhaitées de Blanose™ 7H9, de Métolose™ 60SH50, de Rhodopol™ 23, de lubrifiant (dans le cas de $(F_{42})$), de bentonite, de baryte et d'Estisol™ 240 sont alors ajoutées successivement sous agitation, la température étant maintenue à 60°C et le mélange résultant est homogénéisé sous agitation jusqu'à l'obtention d'une solution homogène.

Le pH de la boue aqueuse est enfin ajusté à 11,0 par addition de soude sous agitation jusqu'à l'obtention d'une solution homogène.

Les proportions, en pourcentages massiques, des constituants des compositions $(F_{41})$ et $(F_{42})$ sont consignées dans le tableau 9 ci-dessous.

Tableau 9

|  | $(F_{41})$ | $(F_{42})$ |
|---|---|---|
| Eau permutée | Qs 100% | Qs 100% |
| Rhodopol™ 23 [2] | 0,52% | 0,52% |
| Blanose™ 7H9 [3] | 0, 025% | 0, 025% |
| Métolose™ 60SH50 [4] | 0,375% | 0,375% |
| Colclay™ FG90[5] | 2,0% | 2,0% |
| Silicate de sodium | 8,47% | 8,47% |
| Chlorure de sodium | 5,0% | 5,0% |
| Baryte | 9,3% | 9,3% |
| Estisol™ 240[1] | 0,2% | 0,2% |
| (X4) [*] | 0% | 1,5% |

(suite)

| | (F$_{41}$) | (F$_{42}$) |
|---|---|---|
| Soude | qs pH = 11 | qs pH = 11 |

(1) : Estisol™ 240 : Agent anti-mousse commercialisé par la société Estichem.

(2) : Rhodopol™ 23 : Gomme xanthane utilisée comme agent viscosant et commercialisée par la société Rhodia.

(3) : Blanose™ 7H9 : Carboxyméthyl cellulose utilisée comme agent réducteur de filtrat et commercialisée par la société Aqualon.

(4) : Métolose™ 60SH50 : Hydroxypropylméthyl cellulose utilisée comme agent réducteur de filtrat et commercialisée par la société Aqualon.

(5) : Colclay™ FG90 : Bentonite utilisée comme agent épaississant inorganique et commercialisée par la société Minerais de la Méditerranée.

$^{(*)}$ : Teneur massique en extrait sec.

Des échantillons de chacune des compositions (F$_{41}$) et (F$_{42}$), ont été placés dans un four à rouleaux à une température de 120°C pendant 16 heures. Ces conditions de stockage permettent de simuler les conditions de températures subies par un fluide forage lors de sa mise en œuvre dans un procédé de forage en grande profondeur. Ces compositions sont ensuite évaluées par la procédure expérimentale décrite au paragraphe D-1) précédent, avec une vitesse de rotation de l'anneau de 60 tours/minutes et des valeurs de moments de force appliqués entre l'anneau et le bloc fixe de 16,948 Nm (150 inch-pound force) et comparées à de l'eau.

Les résultats obtenus sont consignés dans le tableau 10 ci-dessous.

Tableau 10

| | Aspect | V$^{frot.}$ | $\lambda$ | $\delta_{red}$ |
|---|---|---|---|---|
| Eau | Ho | 32,7 | 0,340 | - |
| (F$_{41}$) | Ho | 36,3 | 0,377 | - |
| (F$_{42}$) | Ho | 27,0 | 0,281 | 25% |

Dans les conditions expérimentales d'évaluation du pouvoir lubrifiant telles que décrites ci-dessus, la composition (F$_{42}$), ayant été préalablement soumises à des conditions de vieillissement accélérées et comprenant la composition lubrifiante (X$_4$), présente une valeur relative du couple de frottement significativement inférieure à la valeur du couple de frottement de la composition (F$_{41}$) ne comprenant pas d'agent lubrifiant. De plus, la composition (F$_{42}$) permet de réduire le couple de torsion d'une valeur de 25% par rapport à la composition (F$_{41}$).

### E) Etude des propriétés inhibitrices de gonflement des argiles.

Les propriétés inhibitrices du gonflement des argiles sont mises en évidence selon une méthode consistant à évaluer les caractéristiques rhéologiques de dispersion de 5,7 grammes (soit 10 lb/bbl) de bentonite API dans 200 mL de phase aqueuse. Cette méthode, décrite dans l'article intitulé « Advances in inhibitive Water-Based drilling fluids - Can they replace oil-based muds » (Society of Petroleum Engineers, SPE 106476, 2007), comprend les étapes suivantes :

a) - La préparation des compositions aqueuses à tester

b) - Le calcul de leurs seuils d'écoulement à partir de la mesure des contraintes de cisaillement, à différents gradients de vitesse;

c) - L'ajout d'une quantité de 5,7 grammes (soit 10 lb/bbl) de bentonite API dans chacune des compositions aqueuses à tester ;

d) - Le stockage des compositions préparées à l'étape c) dans une étuve à rouleaux pendant 16 heures à 65°C (150°F) ;

e) - Le calcul des seuils d'écoulement des compositions aqueuses issues de l'étape d) ;

f) - Dans l'hypothèse où le seuil d'écoulement mesuré à l'étape e) n'évolue pas de façon significative, les étapes c), d) et e) sont appliquées à la composition concernée, de façon successive jusqu'à obtention d'une valeur du seuil d'écoulement significativement différente de celle obtenue à l'étape précédente.

Pour chaque composition expérimentale, le calcul du seuil d'écoulement met en oeuvre une méthode adaptée de la norme API 13B-1 (« Recommended Practice for Field Testing Water-based Drilling Fluids), consistant à déterminer les propriétés rhéologiques de ladite composition, par la mesure des contraintes de cisaillement de ladite composition à différentes vitesses de rotation ($CS_v$).

Les mesures de viscosité nécessaires pour le calcul du seuil d'écoulement sont réalisées à l'aide de l'appareil « Speed Viscosimeter, Model 800 », équipé du rotor-stator R1B1, commercialisé par la société OFITE, à 20°C et à des vitesses de 600 tours/minute, de 300 tours/minute, de 200 tours/minute, de 100 tours/minute, de 60 tours/minute, de 30 tours/minute, de 6 tours/minute et de 3 tours/minute. A partir de ces mesures, l'expérimentateur calcule :

-   La viscosité apparente (VA) selon la formule suivante :

$$VA = CS_{600} / 2$$

-   La viscosité plastique (VP) selon la formule suivante :

$$VP = CS_{600} - CS_{300}$$

-   Le seuil d'écoulement (SE) selon la formule suivante :
    SE = Viscosité à 300 tours/minute - VP

Les contrainte de cisaillement aux différentes vitesses sont mesurées en lb./100ft$^2$ et le seuil d'écoulement s'exprime aussi en lb./100ft$^2$ (en prenant en considération que 1 lb./100ft$^2$ = 0,0488 kg/m$^2$).

Les compositions aqueuses testées selon la méthode d'évaluation des propriétés inhibitrices du gonflement des argiles, sont référencées ($F_{51}$) et ($F_{52}$) et sont préparées selon le même mode opératoire suivant :

-   La quantité d'eau souhaitée est introduite sous agitation dans un réacteur maintenu à 20°C, suivie de la quantité de chlorure de calcium souhaitée puis le mélange résultant agité pendant 30 minutes. Les autres ingrédients sont alors ajoutés successivement à 20°C et le tout agité jusqu'à obtention d'une solution limpide.

Les proportions, en pourcentages massiques, des constituants des compositions ($F_{51}$) et ($F_{52}$), sont consignées dans le tableau 11 ci-dessous.

Tableau 11.

|  | ($F_{51}$) | ($F_{52}$) |
|---|---|---|
| CaCl$_2$ | 35% | 35% |
| Eau | Qs 100% | Qs 100% |
| Estisol™ 240[1] | 0% | 0,2% |
| ($X_4$) | 0% | 5% |

Les valeurs des seuils d'écoulement mesurées, après chaque ajout d'une quantité de 10 lb/bbl (soit 5,7 grammes) de bentonite API dans chacune des compositions aqueuses ($F_{51}$) et ($F_{52}$) sont consignées dans le tableau 12 suivant :

Tableau 12

|  | Eau | | ($F_{51}$) | | ($F_{52}$) | |
|---|---|---|---|---|---|---|
|  | SE en : | | SE en: | | SE en : | |
| Bentonite ajoutée | lb./100ft$^2$ | kg.m$^{-2}$ | lb./100ft$^2$ | kg.m$^{-2}$ | lb./100ft$^2$ | kg.m$^{-2}$ |
| 10 lb/bbl (5,7g) | 1 | 0,0488 | 1 | 0,0488 | 1 | 0,0488 |
| 20 lb/bbl (11,4g) | 15 | 0,732 | 1 | 0,0488 | 1 | 0,0488 |
| 30 lb/bbl (17,1g) | 105 | 5,124 | 1 | 0,0488 | 1 | 0,0488 |

(suite)

|  | Eau | | $(F_{51})$ | | $(F_{52})$ | |
|---|---|---|---|---|---|---|
|  | SE en : | | SE en: | | SE en : | |
| Bentonite ajoutée | lb./100ft$^2$ | kg.m$^{-2}$ | lb./100ft$^2$ | kg.m$^{-2}$ | lb./100ft$^2$ | kg.m$^{-2}$ |
| 40 lb/bbl (22,8g) | n.d. | n.d. | 5 | 0,244 | 1 | 0,0488 |
| 50 lb/bbl (28,5g) | n.d. | n.d. | 10 | 0,488 | 1 | 0,0488 |
| 60 lb/bbl (34,2g) | n.d. | n.d. | 20 | 0,976 | 1 | 0,0488 |
| 70 lb/bbl (39,9g) | n.d. | n.d. | 25 | 1,220 | 1 | 0,0488 |
| 80 lb/bbl (45,6g) | n.d. | n.d. | 35 | 1,708 | 1 | 0,0488 |
| n.d. : non déterminé | | | | | | |

Dans les conditions expérimentales d'évaluation telles que décrites ci-dessus, on observe que le seuil d'écoulement de la composition $(F_{52})$, comprenant la composition $(X_4)$ selon l'invention, reste égal à 1 lb./100ft$^2$ (soit 0,0488 kg.m$^2$) après l'ajout de 80 lb/bbl (soit 45,6g) de Bentonite API, alors que le seuil d'écoulement de la composition témoin $(F_{51})$ s'élève à 35 lb./100ft$^2$ (soit 1,708 kg.m$^{-2}$). La composition $(X_4)$ procure donc des propriétés inhibitrices de gonflement des argiles à une composition aqueuse susceptible d'être utilisée dans un procédé de forage selon l'invention.

## Revendications

1.  Procédé de forage de cavités dans des formations souterraines, ledit procédé comprenant une étape d'évacuation des déblais de forage desdites formations souterraines par injection dans le puits de forage d'une composition aqueuse (C) comprenant pour 100% de sa masse :

    - De 1% à 65% massique d'au moins un sel (S) constitué par au moins un cation choisi parmi l'ion ammonium et les cations métalliques, et au moins un anion choisi parmi les ions chlorure, bromure, carbonate, bicarbonate, hydrogénocarbonate, silicate, métasilicate, sulfate, hydrogénosulfate, borate, tétraborate, dihydrogénoborate, hydrogénoborate, hydrogénotétraborate, ou les anions organiques portant une fonction carboxylate ;
    - De 0,05% à 2% massique d'au moins un agent anti-mousse,
    - De 13% à 97,95% massique d'eau et
    - De 1% à 20% massique d'une composition $(C_2)$ comprenant pour 100% de sa masse :

        - Optionnellement, de 0,1% à 30% massique d'au moins un agent auxiliaire choisi parmi les éléments du groupe constitué par l'érythritol, le xylitol, le sorbitol, le gluconate de sodium, le glucose et les maltodextrines ;
        - De 50% à 100% massique d'un système tensioactif (TA) consistant pour 100% de sa masse en un mélange :

            - De 25% à 78% massique d'une composition $(C_1)$ représentée par la formule (I) :

            $$R_1\text{-}O\text{-}(G_1)_p\text{-}H \qquad (I)$$

            dans laquelle $R_1$ représente le radical heptyle,

        - De 20% à 50% massique d'une composition $(C_1)$ représentée par la formule (I) dans laquelle $R_1$ représente le radical décyle,
        - De 1% à 15% massique d'une composition $(C_1)$ représentée par la formule (I) dans laquelle $R_1$ représente le radical dodécyle, et
        - De 1% à 10% massique d'une composition $(C_1)$ représentée par la formule (I) dans laquelle $R_1$ représente le radical tétradécyle,
        avec dans la formule (I) $G_1$ représentant le reste d'un sucre réducteur et p représente un nombre décimal supérieur ou égal à 1,05 et inférieur ou égal à 5, ladite composition $(C_1)$ consistant en un mélange de composés représentés par les formules $(I_1)$, $(I_2)$, $(I_3)$, $(I_4)$ et $(I_5)$

        $$R_1\text{-}O\text{-}(G_1)_1\text{-}H \qquad (I_1),$$

$$R_1\text{-O-}(G_1)_2\text{-H} \qquad (I_2),$$

$$R_1\text{-O-}(G_1)_3\text{-H} \qquad (I_3),$$

$$R_1\text{-O-}(G_1)_4\text{-H} \qquad (I_4),$$

$$R_1\text{-O-}(G_1)_5\text{-H} \qquad (I_5),$$

dans les proportions molaires respectives $a_1$, $a_2$, $a_3$, $a_4$ et $a_5$, telles que la somme : $a_1 + a_2 + a_3 + a_4 + a_5$ est égale à 1 et la somme $a_1 + 2a_2 + 3a_3 + 4a_4 + 5a_5$ est égale à p ;

- Et de 0% à 50% massique d'au moins un alcool de formule (II) :

$$R_1\text{-OH} \qquad (II)$$

dans laquelle $R_1$ représente un radical aliphatique linéaire ou ramifié, saturé ou insaturé, comportant de 4 à 16 atomes de carbone.

2. Procédé de forage de cavités dans des formations souterraines, ledit procédé comprenant une étape d'évacuation des déblais de forage desdites formations souterraines par injection dans le puits de forage d'une composition aqueuse (C) comprenant pour 100% de sa masse :

- De 1% à 65% massique d'au moins un sel (S) constitué par au moins un cation choisi parmi l'ion ammonium et les cations métalliques, et au moins un anion choisi parmi les ions chlorure, bromure, carbonate, bicarbonate, hydrogénocarbonate, silicate, métasilicate, sulfate, hydrogénosulfate, borate, tétraborate, dihydrogénoborate, hydrogénoborate, hydrogénotétraborate, ou les anions organiques portant une fonction carboxylate ;
- De 0,05% à 2% massique d'au moins un agent anti-mousse,
- De 13% à 97,95% massique d'eau et
- De 1% à 20% massique d'une composition ($C_2$) comprenant pour 100% de sa masse :

- Optionnellement, de 0,1% à 30% massique d'au moins un agent auxiliaire choisi parmi les éléments du groupe constitué par l'érythritol, le xylitol, le sorbitol, le gluconate de sodium, le glucose et les maltodextrines ;
- De 50% à 100% massique d'un système tensioactif (TA) consistant pour 100% de sa masse en un mélange :

- De 25% à 78% massique d'une composition ($C_1$) représentée par la formule (I) :

$$R_1\text{-O-}(G_1)_p\text{-H} \qquad (I)$$

dans laquelle $R_1$ représente le radical 2-éthyl hexyle,

- De 20% à 50% massique d'une composition ($C_1$) représentée par la formule (I) dans laquelle $R_1$ représente le radical décyle,
- De 1% à 15% massique d'une composition ($C_1$) représentée par la formule (I) dans laquelle $R_1$ représente le radical dodécyle, et
- De 1% à 10% massique d'une composition ($C_1$) représentée par la formule (I) dans laquelle $R_1$ représente le radical tétradécyle,
avec dans la formule (I) $G_1$ représentant le reste d'un sucre réducteur et p représente un nombre décimal supérieur ou égal à 1,05 et inférieur ou égal à 5, ladite composition ($C_1$) consistant en un mélange de composés représentés par les formules (I1), ($I_2$), ($I_3$), ($I_4$) et ($I_5$)

$$R_1\text{-O-}(G_1)_1\text{-H} \qquad (I_1),$$

$$R_1\text{-O-}(G_1)_2\text{-H} \qquad (I_2),$$

$$R_1\text{-O-}(G_1)_3\text{-H} \qquad (I_3),$$

$$R_1\text{-}O\text{-}(G_1)_4\text{-}H \qquad (I_4),$$

$$R_1\text{-}O\text{-}(G_1)_5\text{-}H \qquad (I_5),$$

dans les proportions molaires respectives $a_1$, $a_2$, $a_3$, $a_4$ et $a_5$, telles que la somme : $a_1 + a_2 + a_3 + a_4 + a_5$ est égale à 1 et la somme $a_1 + 2a_2 + 3a_3 + 4a_4 + 5a_5$ est égale à p ;

- Et de 0% à 50% massique d'au moins un alcool de formule (II) :

$$R_1\text{-}OH \qquad (II)$$

dans laquelle $R_1$ représente un radical aliphatique linéaire ou ramifié, saturé ou insaturé, comportant de 4 à 16 atomes de carbone.

3. Procédé tel que défini dans l'une ou quelconque des revendications 1 ou 2, **caractérisé en ce que** ladite composition $(C_2)$ comprend pour 100% de sa masse :

- Une proportion massique en ledit système tensioactif (TA), supérieure ou égale à 90% et inférieure à 100% et
- Une proportion massique en ledit alcool de formule (II) supérieure à 0% et inférieure ou égale à 10 %.

4. Procédé tel que défini dans l'une ou quelconque des revendications 1 à 3, **caractérisé en ce que** dans la formule (I), $G_1$ représente le reste d'un sucre réducteur choisi parmi les reste du glucose, du xylose et de l'arabinose.

5. Procédé tel que défini dans l'une ou quelconque des revendications 1 à 4, **caractérisé en ce que** dans la formule (I), p représente un nombre décimal supérieur ou égal à 1,05 et inférieur ou égal à 2,5.

6. Procédé tel que défini à l'une ou quelconque des revendications 1 à 5, **caractérisé en ce que** dans la formule (I) et dans la formule (II), $R_1$ représente un radical alkyle choisi parmi les radicaux butyle, hexyle, heptyle, 2-éthyl hexyle, octyle, décyle, dodécyle, tétradécyle ou hexadécyle.

7. Procédé tel que défini à l'une ou quelconque des revendications 1 à 6, **caractérisé en ce que** ladite composition $(C_2)$ comprend pour 100% de sa masse :

- De 0,1% à 30% massique d'au moins un agent auxiliaire choisi parmi les éléments du groupe constitué par l'érythritol, le xylitol, le sorbitol, le gluconate de sodium, le glucose et les maltodextrines ;
- De 35% à 99,9% massique du dit tensioactif (TA) ; et
- De 0% à 35% massique d'au moins un alcool de formule (II).

8. Procédé tel que défini à l'une ou quelconque des revendications 1 à 7 **caractérisé en ce que** le sel (S) est choisi parmi le chlorure de sodium, le chlorure de potassium, le chlorure de calcium, le carbonate de potassium, le bromure de calcium, le bromure de zinc, le silicate de sodium, le métasilicate de sodium ou le tétraborate de sodium.

9. Procédé de forage de cavités dans des formations souterraines, ledit procédé comprenant une étape d'évacuation des déblais de forage desdites formations souterraines par injection dans le puits de forage d'une composition aqueuse (C) comprenant pour 100% de sa masse :

- De 1% à 65% massique d'au moins un sel (S) constitué par au moins un cation choisi parmi l'ion ammonium et les cations métalliques, et au moins un anion choisi parmi les ions chlorure, bromure, carbonate, bicarbonate, hydrogénocarbonate, silicate, métasilicate, sulfate, hydrogénosulfate, borate, tétraborate, dihydrogénoborate, hydrogénoborate, hydrogénotétraborate, ou les anions organiques portant une fonction carboxylate ;
- De 0,05% à 2% massique d'au moins un agent anti-mousse,
- De 13% à 97,95% massique d'eau et
- De 1% à 20% massique d'une composition $(C_{21})$ comprenant pour 100% de sa masse :

  - De 5% à 100% massique d'un mélange $(M_1)$ consistant en, pour 100% de sa masse :

    - De 25% à 78% massique d'une composition $(C_1)$ représentée par la formule (I) dans laquelle $R_1$

représente le radical heptyle ou le radical 2-éthyl hexyle,
- De 20% à 50% massique d'une composition $(C_1)$ représentée par la formule (I) dans laquelle $R_1$ représente le radical décyle,
- De 1% à 15% massique d'une composition $(C_1)$ représentée par la formule (I) dans laquelle $R_1$ représente le radical dodécyle, et
- De 1% à 10% massique d'une composition $(C_1)$ représentée par la formule (I) dans laquelle $R_1$ représente le radical tétradécyle.

     - De 0% à 95% massique d'eau.

**10.** Procédé selon la revendication 9, **caractérisé en ce que** la composition $(C_{21})$ comprend en outre pour 100% de sa masse, de 0,1% à 30% massique d'au moins un agent auxiliaire choisi parmi l'érythritol, le xylitol, le sorbitol, le gluconate de sodium, le glucose et les maltodextrines.

## Patentansprüche

**1.** Verfahren zum Bohren von Hohlräumen in unterirdischen Formationen, wobei das Verfahren einen Schritt des Räumens des Bohrkleins aus den unterirdischen Formationen durch Injektion einer wässrigen Zusammensetzung (C) in das Bohrloch umfasst, die auf 100 % ihrer Masse umfasst:

- 1 Masse-% bis 65 Masse-% mindestens eines Salzes (S), das aus mindestens einem Kation, ausgewählt aus dem Ammonium-Ion und den Metallkationen, und mindestens einem Anion besteht, ausgewählt aus den Chlorid-, Bromid-, Carbonat-, Bicarbonat-, Hydrogencarbonat-, Silikat-, Metasilikat-, Sulfat-, Hydrogensulfat-, Borat-, Tetraborat-, Dihydrogenborat-, Hydrogenborat-, Hydrogentetraborat-Ionen oder den organischen Anionen, die eine Carboxylatfunktion tragen;
- 0,05 Masse-% bis 2 Masse-% mindestens eines Antischaummittels,
- 13 Masse-% bis 97,95 Masse-% Wasser und
- 1 Masse-% bis 20 Masse-% einer Zusammensetzung $(C_2)$, die auf 100 % ihrer Masse umfasst:

- gegebenenfalls 0,1 Masse-% bis 30 Masse-% mindestens eines Hilfsmittels, ausgewählt aus den Elementen der Gruppe bestehend aus dem Erythrit, dem Xylit, dem Sorbit, dem Natriumgluconat, der Glucose und den Maltodextrinen;
- 50 Masse-% bis 100 Masse-% eines Tensidsystems (TA), das auf 100 % seiner Masse aus einer Mischung besteht aus:

- 25 Masse-% bis 78 Masse-% einer Zusammensetzung $(C_1)$, dargestellt durch die Formel (I):

$$R_1\text{-}O\text{-}(G_1)_p\text{-}H \qquad (I)$$

wobei $R_1$ das Heptylradikal darstellt,
- 20 Masse-% bis 50 Masse-% einer Zusammensetzung $(C_1)$, dargestellt durch die Formel (I), wobei $R_1$ das Decylradikal darstellt,
- 1 Masse-% bis 15 Masse-% einer Zusammensetzung $(C_1)$, dargestellt durch die Formel (I), wobei $R_1$ das Dodecylradikal darstellt, und
- 1 Masse-% bis 10 Masse-% einer Zusammensetzung $(C_1)$, dargestellt durch die Formel (I), wobei $R_1$ das Tetradecylradikal darstellt,
wobei in der Formel (I) $G_1$ den Rest eines reduzierenden Zuckers darstellt und p eine Dezimalzahl größer oder gleich 1,05 und kleiner oder gleich 5 darstellt, wobei die Zusammensetzung $(C_1)$ aus einer Mischung von Verbindungen besteht, dargestellt durch die Formeln $(I_1)$, $(I_2)$, $(I_3)$, $(I_4)$ und $(I_5)$,

$$R_1\text{-}O\text{-}(G_1)_1\text{-}H \qquad (I_1),$$

$$R_1\text{-}O\text{-}(G_1)_2\text{-}H \qquad (I_2),$$

$$R_1\text{-}O\text{-}(G_1)_3\text{-}H \qquad (I_3),$$

$$R_1\text{-}O\text{-}(G_1)_4\text{-}H \qquad (I_4),$$

$$R_1\text{-O-}(G_1)_5\text{-H} \qquad (I_5),$$

in den jeweiligen molaren Anteilen $a_1$, $a_2$, $a_3$, $a_4$ und $a_5$ derart, dass die Summe: $a_1 + a_2 + a_3 + a_4 + a_5$ gleich 1 ist und die Summe $a_1 + 2a_2 + 3a_3 + 4a_4 + 5a_5$ gleich p ist;
- und 0 Masse-% bis 50 Masse-% mindestens eines Alkohols der Formel (II):

$$R_1\text{-OH} \qquad (II)$$

wobei $R_1$ ein gerades oder verzweigtes, gesättigtes oder ungesättigtes aliphatisches Radikal darstellt, das 4 bis 16 Kohlenstoffatome umfasst.

2. Verfahren zum Bohren von Hohlräumen in unterirdischen Formationen, wobei das Verfahren einen Schritt des Räumens des Bohrkleins aus den unterirdischen Formationen durch Injektion einer wässrigen Zusammensetzung (C) in das Bohrloch umfasst, die auf 100 % ihrer Masse umfasst:

- 1 Masse-% bis 65 Masse-% mindestens eines Salzes (S), das aus mindestens einem Kation, ausgewählt aus dem Ammonium-Ion und den Metallkationen, und mindestens einem Anion besteht, ausgewählt aus Chlorid-, Bromid-, Carbonat-, Bicarbonat-, Hydrogencarbonat-, Silikat-, Metasilikat-, Sulfat-, Hydrogensulfat-, Borat-, Tetraborat-, Dihydrogenborat-, Hydrogenborat-, Hydrogentetraborat-Ionen oder den organischen Anionen, die eine Carboxylatfunktion tragen;
- 0,05 Masse-% bis 2 Masse-% mindestens eines Antischaummittels,
- 13 Masse-% bis 97,95 Masse-% Wasser und
- 1 Masse-% bis 20 Masse-% einer Zusammensetzung ($C_2$), die auf 100 % ihrer Masse umfasst:

- gegebenenfalls 0,1 Masse-% bis 30 Masse-% mindestens eines Hilfsmittels, ausgewählt aus den Elementen der Gruppe bestehend aus dem Erythrit, dem Xylit, dem Sorbit, dem Natriumgluconat, der Glucose und den Maltodextrinen;
- 50 Masse-% bis 100 Masse-% eines Tensidsystems (TA), das auf 100 % seiner Masse aus einer Mischung besteht aus:

- 25 Masse-% bis 78 Masse-% einer Zusammensetzung ($C_1$), dargestellt durch die Formel (I):

$$R_1\text{-O-}(G_1)_p\text{-H} \qquad (I)$$

wobei $R_1$ das 2-Ethylhexylradikal darstellt,
- 20 Masse-% bis 50 Masse-% einer Zusammensetzung ($C_1$), dargestellt durch die Formel (I), wobei $R_1$ das Decylradikal darstellt,
- 1 Masse-% bis 15 Masse-% einer Zusammensetzung ($C_1$), dargestellt durch die Formel (I), wobei $R_1$ das Dodecylradikal darstellt, und
- 1 Masse-% bis 10 Masse-% einer Zusammensetzung ($C_1$), dargestellt durch die Formel (I), wobei $R_1$ das Tetradecylradikal darstellt,
wobei in der Formel (I) $G_1$ den Rest eines reduzierenden Zuckers darstellt und p eine Dezimalzahl größer oder gleich 1,05 und kleiner oder gleich 5 darstellt, wobei die Zusammensetzung ($C_1$) aus einer Mischung von Verbindungen besteht, dargestellt durch die Formeln ($I_1$), ($I_2$), ($I_3$), ($I_4$) und ($I_5$),

$$R_1\text{-O-}(G_1)_1\text{-H} \qquad (I_1),$$

$$R_1\text{-O-}(G_1)_2\text{-H} \qquad (I_2),$$

$$R_1\text{-O-}(G_1)_3\text{-H} \qquad (I_3),$$

$$R_1\text{-O-}(G_1)_4\text{-H} \qquad (I_4),$$

$$R_1\text{-O-}(G_1)_5\text{-H} \qquad (I_5),$$

in den jeweiligen molaren Anteilen $a_1$, $a_2$, $a_3$, $a_4$ und $a_5$ derart, dass die Summe: $a_1 + a_2 + a_3 + a_4 +$

$a_5$ gleich 1 ist und die Summe $a_1 + 2a_2 + 3a_3 + 4a_4 + 5a_5$ gleich p ist;
- und 0 Masse-% bis 50 Masse-% mindestens eines Alkohols der Formel (II):

$$R_1\text{-OH} \qquad (II),$$

wobei $R_1$ ein gerades oder verzweigtes, gesättigtes oder ungesättigtes aliphatisches Radikal darstellt, das 4 bis 16 Kohlenstoffatome umfasst.

3. Verfahren nach einem der Ansprüche 1 oder 2, **dadurch gekennzeichnet, dass** die Zusammensetzung ($C_2$) auf 100 % ihrer Masse umfasst:

- einen Massenanteil des Tensidsystems (TA) von größer oder gleich 90 % und kleiner als 100 % und
- einen Massenanteil des Alkohols der Formel (II) von größer als 0 % und kleiner oder gleich 10%.

4. Verfahren nach einem der Ansprüche 1 bis 3, **dadurch gekennzeichnet, dass** in der Formel (I) $G_1$ den Rest eines reduzierenden Zuckers darstellt, ausgewählt aus den Rest von Glucose, Xylose und Arabinose.

5. Verfahren nach einem der Ansprüche 1 bis 4, **dadurch gekennzeichnet, dass** in der Formel (I) p eine Dezimalzahl größer oder gleich 1,05 und kleiner oder gleich 2,5 darstellt.

6. Verfahren nach einem der Ansprüche 1 bis 5, **dadurch gekennzeichnet, dass** in der Formel (I) und in der Formel (II) $R_1$ ein Alkylradikal darstellt, ausgewählt aus den Butyl-, Hexyl-, Heptyl-, 2-Ethylhexyl-, Octyl-, Decyl-, Dodecyl-, Tetradecyl- oder Hexadecyl-Radikalen.

7. Verfahren nach einem der Ansprüche 1 bis 6, **dadurch gekennzeichnet, dass** die Zusammensetzung ($C_2$) auf 100 % ihrer Masse umfasst:

- 0,1 Masse-% bis 30 Masse-% mindestens eines Hilfsmittels, ausgewählt aus den Elementen der Gruppe bestehend aus dem Erythrit, dem Xylit, dem Sorbit, dem Natriumgluconat, der Glucose und den Maltodextrinen;
- 35 Masse-% bis 99,9 Masse-% des Tensids (TA); und
- 0 Masse-% bis 35 Masse-% mindestens eines Alkohols der Formel (II).

8. Verfahren nach einem der Ansprüche 1 bis 7, **dadurch gekennzeichnet, dass** das Salz (S) ausgewählt ist aus dem Natriumchlorid, dem Kaliumchlorid, dem Calciumchlorid, dem Kaliumcarbonat, dem Calciumbromid, dem Zinkbromid, dem Natriumsilikat, dem Natriummetasilikat oder dem Natriumtetraborat.

9. Verfahren zum Bohren von Hohlräumen in unterirdischen Formationen, wobei das Verfahren einen Schritt des Räumens des Bohrkleins aus den unterirdischen Formationen durch Injektion einer wässrigen Zusammensetzung (C) in das Bohrloch umfasst, die auf 100 % ihrer Masse umfasst:

- 1 Masse-% bis 65 Masse-% mindestens eines Salzes (S), das aus mindestens einem Kation, ausgewählt aus dem Ammonium-Ion und den Metallkationen, und mindestens einem Anion besteht, ausgewählt aus den Chlorid-, Bromid-, Carbonat-, Bicarbonat-, Hydrogencarbonat-, Silikat-, Metasilikat-, Sulfat-, Hydrogensulfat-, Borat-, Tetraborat-, Dihydrogenborat-, Hydrogenborat-, Hydrogentetraborat-Ionen oder den organischen Anionen, die eine Carboxylatfunktion tragen;
- 0,05 Masse-% bis 2 Masse-% mindestens eines Antischaummittels,
- 13 Masse-% bis 97,95 Masse-% Wasser und
- 1 Masse-% bis 20 Masse-% einer Zusammensetzung ($C_{21}$), die auf 100 % ihrer Masse umfasst:

- 5 Masse-% bis 100 Masse-% einer Mischung ($M_1$), die auf 100 % ihrer Masse besteht aus:

- 25 Masse-% bis 78 Masse-% einer Zusammensetzung ($C_1$), dargestellt durch die Formel (I), wobei $R_1$ das Heptylradikal oder das 2-Ethylhexylradikal darstellt,
- 20 Masse-% bis 50 Masse-% einer Zusammensetzung ($C_1$), dargestellt durch die Formel (I), wobei $R_1$ das Decylradikal darstellt,
- 1 Masse-% bis 15 Masse-% einer Zusammensetzung ($C_1$), dargestellt durch die Formel (I), wobei $R_1$ das Dodecylradikal darstellt, und

- 1 Masse-% bis 10 Masse-% einer Zusammensetzung ($C_1$), dargestellt durch die Formel (I), wobei $R_1$ das Tetradecylradikal darstellt.
- 0 Masse-% bis 95 Masse-% Wasser.

10. Verfahren nach Anspruch 9, **dadurch gekennzeichnet, dass** die Zusammensetzung ($C_{21}$) weiter auf 100 % ihrer Masse 0,1 Masse-% bis 30 Masse-% mindestens eines Hilfsmittels umfasst, ausgewählt aus dem Erythrit, dem Xylit, dem Sorbit, dem Natriumgluconat, der Glucose und den Maltodextrinen.

**Claims**

1. Method for drilling cavities in underground formation, said method comprising a step of evacuating drilling cuttings from said underground formations by injection in drilling wells of an aqueous composition (C) comprising for 100% of the mass thereof:

- From 1% to 65% by mass of at least one salt (S) constituted by at least one cation selected from among ammonium ion and metal cations, and at least one anion selected from among chloride, bromide, carbonate, bicarbonate, hydrogen carbonate, silicate, metasilicate, sulphate, hydrogen sulphate, borate, tetraborate, dihydrogen borate, hydrogen borate, hydrogen tetraborate ions, or organic anions having a carboxylate function;
- From 0.05% to 2% by mass of at least one anti-foaming agent,
- From 13% to 97.95% by mass of water, and
- From 1% to 20% by mass of a composition ($C_2$) comprising for 100% of the mass thereof:

  - Optionally, from 0.1% to 30% by mass of at least one auxiliary agent selected from among elements from the group constituted by erythritol, xylitol, sorbitol, sodium gluconate, glucose and maltodextrins;
  - From 50% to 100% by mass of a surfactant (TA) system consisting for 100% of the mass thereof in a mixture:

    - From 25% to 78% by mass of a composition ($C_1$) represented by the formula (I):

      $$R_1\text{-O-}(G_1)_p\text{-H} \qquad (I)$$

      wherein $R_1$ represents the heptyl radical,
    - From 20% to 50% by mass of a composition ($C_1$) represented by the formula (I) wherein $R_1$ represents the decyl radical,
    - From 1% to 15% by mass of a composition ($C_1$) represented by the formula (I) wherein $R_1$ represents the dodecyl radical, and
    - From 1% to 10% by mass of a composition ($C_1$) represented by the formula (I) wherein $R_1$ represents the tetradecyl radical,

    with, in the formula (I), $G_1$ representing the remainder of a reducing sugar and p represents a decimal number greater than or equal to 1.05 and less than or equal to 5, said composition ($C_1$) consisting of a mixture of compounds represented by the formulas ($I_1$), ($I_2$), ($I_3$), ($I_4$) and ($I_5$):

    $$R_1\text{-O-}(G_1)_1\text{-H} \qquad (I_1),$$

    $$R_1\text{-O-}(G_1)_2\text{-H} \qquad (I_2),$$

    $$R_1\text{-O-}(G_1)_3\text{-H} \qquad (I_3),$$

    $$R_1\text{-O-}(G_1)_4\text{-H} \qquad (I_4),$$

    $$R_1\text{-O-}(G_1)_5\text{-H} \qquad (I_5),$$

    in the respective molar proportions $a_1$, $a_2$, $a_3$, $a_4$ and $a_5$, such as the sum: $a_1 + a_2 + a_3 + a_4 + a_5$ is equal to 1 and the sum $a_1 + 2a_2 + 3a_3 + 4a_4 + 5a_5$ is equal to p;
    - And from 0% to 50% by mass of at least one alcohol of formula (II):

    $$R_1\text{-OH} \qquad (II)$$

wherein $R_1$ represents a linear or ramified, saturated or unsaturated aliphatic radical, comprising from 4 to 16 carbon atoms.

2. Method for drilling cavities in underground formations, said method comprising a step of evacuating drilling cuttings from said underground formations by injection in the drilling wells of an aqueous composition (C) comprising for 100% of the mass thereof:

- From 1% to 65% by mass of at least one salt (S) constituted by at least one cation selected from among ammonium ion and metal cations, and at least one anion selected from among chloride, bromide, carbonate, bicarbonate, hydrogen carbonate, silicate, metasilicate, sulphate, hydrogen sulphate, borate, tetraborate, dihydrogen borate, hydrogen borate, hydrogen tetraborate ions, or organic anions having a carboxylate function;
- From 0.05% to 2% by mass of at least one anti-foaming agent,
- From 13% to 97.95% by mass of water, and
- From 1% to 20% by mass of a composition ($C_2$) comprising for 100% of the mass thereof:

- Optionally, from 0.1% to 30% by mass of at least one auxiliary agent selected from among elements from the group constituted by erythritol, xylitol, sorbitol, sodium gluconate, glucose and maltodextrins;
- From 50% to 100% by mass of a surfactant (TA) system consisting for 100% of the mass thereof in a mixture:

- From 25% to 78% by mass of a composition ($C_1$) represented by the formula (I):

$$R_1\text{-O-}(G_1)_p\text{-H} \qquad (I)$$

wherein $R_1$ represents the 2-ethyl hexyl radical,
- From 20% to 50% by mass of a composition ($C_1$) represented by the formula (I) wherein $R_1$ represents the decyl radical,
- From 1% to 15% by mass of a composition ($C_1$) represented by the formula (I) wherein $R_1$ represents the dodecyl radical, and
- From 1% to 10% by mass of a composition ($C_1$) represented by the formula (I) wherein $R_1$ represents the tetradecyl radical,
with, in the formula (I), $G_1$ representing the remainder of a reducing sugar and p represents a decimal number greater than or equal to 1.05 and less than or equal to 5, said composition ($C_1$) consisting of a mixture of compounds represented by the formulas ($I_1$), ($I_2$), ($I_3$), ($I_4$) and ($I_5$):

$$R_1\text{-O-}(G_1)_1\text{-H} \qquad (I_1),$$

$$R_1\text{-O-}(G_1)_2\text{-H} \qquad (I_2),$$

$$R_1\text{-O-}(G_1)_3\text{-H} \qquad (I_3),$$

$$R_1\text{-O-}(G_1)_4\text{-H} \qquad (I_4),$$

$$R_1\text{-O-}(G_1)_5\text{-H} \qquad (I_5),$$

in the respective molar proportions $a_1$, $a_2$, $a_3$, $a_4$ and $a_5$, such as the sum: $a_1 + a_2 + a_3 + a_4 + a_5$ is equal to 1 and the sum $a_1 + 2a_2 + 3a_3 + 4a_4 + 5a_5$ is equal to p;
- And from 0% to 50% by mass of at least one alcohol of formula (II):

$$R_1\text{-OH} \qquad (II)$$

wherein $R_1$ represents a linear or ramified, saturated or unsaturated aliphatic radical, comprising from 4 to 16 carbon atoms.

3. Method such as defined in any one of claims 1 or 2, **characterised in that** said composition ($C_2$) comprises for 100% of the mass thereof:

- A mass proportion in said surfactant (TA) system, greater than or equal to 90% and less than 100%, and

- A mass proportion in said alcohol of formula (II) greater than 0% and less than or equal to 10%.

4. Method such as defined in any one of claims 1 to 3, **characterised in that** in the formula (I), $G_1$ represents the remainder of a reducing sugar selected from among the remainder of glucose, xylose and arabinose.

5. Method such as defined in any one of claims 1 to 4, **characterised in that** in the formula (I), p represents a decimal number greater than or equal to 1.05 and less than or equal to 2.5.

6. Method such as defined in any one of claims 1 to 5, **characterised in that** in the formula (I) and in the formula (II), $R_1$ represents an alkyl radical selected from among butyl, hexyl, heptyl, 2-ethyl hexyl, octyl, decyl, dodecyl, tetradecyl or hexadecyl radicals.

7. Method such as defined in any one of claims 1 to 6, **characterised in that** said composition ($C_2$) comprises for 100% of the mass thereof:

   - From 0.1% to 30% by mass of at least one auxiliary agent selected from among the elements from the group constituted by erythritol, xylitol, sorbitol, sodium gluconate, glucose and maltodextrins;
   - From 35% to 99.9% by mass of said surfactant (TA); and
   - From 0% to 35% by mass of at least one alcohol of formula (II).

8. Method such as defined in any one of claims 1 to 7, **characterised in that** the salt (S) is selected from among sodium chloride, potassium chloride, calcium chloride, potassium carbonate, calcium bromide, zinc bromide, sodium silicate, sodium metasilicate or sodium tetraborate.

9. Method for drilling cavities in underground formations, said method comprising a step of evacuating drilling cuttings from said underground formations by injection in the drilling wells of an aqueous composition (C) comprising for 100% of the mass thereof:

   - From 1% to 65% by mass of at least one salt (S) constituted by at least one cation selected from among ammonium ion and metal cations, and at least one anion selected from among chloride, bromide, carbonate, bicarbonate, hydrogen carbonate, silicate, metasilicate, sulphate, hydrogen sulphate, borate, tetraborate, dihydrogen borate, hydrogen borate, hydrogen tetraborate ions, or organic anions having a carboxylate function;
   - From 0.05% to 2% by mass of at least one anti-foaming agent,
   - From 13% to 97.95% by mass of water, and
   - From 1% to 20% by mass of a composition ($C_2$) comprising for 100% of the mass thereof:

      - From 5% to 100% by mass of a mixture ($M_1$) consisting of, for 100% of the mass thereof:

         - From 25% to 78% by mass of a composition ($C_1$) represented by the formula (I) wherein $R_1$ represents the heptyl radical or the 2-ethyl hexyl radical,
         - From 20% to 50% by mass of a composition ($C_1$) represented by the formula (I) wherein $R_1$ represents the decyl radical,
         - From 1% to 15% by mass of a composition ($C_1$) represented by the formula (I) wherein $R_1$ represents the dodecyl radical, and
         - From 1% to 10% by mass of a composition ($C_1$) represented by the formula (I) wherein $R_1$ represents the tetradecyl radical.
         - From 0% to 95% by mass of water.

10. Method according to claim 9, **characterised in that** the composition ($C_{21}$) further comprises for 100% of the mass thereof, from 0.1% to 30% by mass of at least one auxiliary agent selected from among erythritol, xylitol, sorbitol, sodium gluconate, glucose and maltodextrins.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5837655 A
- WO 2007146067 A2
- US 20050197255 A1
- WO 0029519 A1
- US 5007489 A
- US 5807811 A
- US 20030232726 A1
- WO 0234793 A2
- US 20030232726 A

**Littérature non-brevet citée dans la description**

- **DANIEL VOET ; JUDITH G. VOET.** Biochemistry. John Wyley & Sons, 1990, 250
- Advances in inhibitive Water-Based drilling fluids - Can they replace oil-based muds. Society of Petroleum Engineers, 2007